(19)

**Europäisches Patentamt**
**European Patent Office**
**Office européen des brevets**

(11) **EP 2 454 475 B1**

(12) **EUROPEAN PATENT SPECIFICATION**

(45) Date of publication and mention
of the grant of the patent:
**28.10.2015 Bulletin 2015/44**

(51) Int Cl.:
*F03D 3/06* (2006.01)

(21) Application number: **11728694.8**

(22) Date of filing: **30.05.2011**

(86) International application number:
**PCT/JP2011/003005**

(87) International publication number:
**WO 2011/148654 (01.12.2011 Gazette 2011/48)**

(54) **POWER GENERATING APPARATUS OF RENEWABLE ENERGY TYPE AND METHOD OF OPERATING THE SAME**

VORRICHTUNG ZUR STROMERZEUGUNG AUS ERNEUERBARER ENERGIE UND BETRIEBSVERFAHREN DAFÜR

APPAREIL DE GÉNÉRATION DE PUISSANCE DE TYPE ÉNERGIE RENOUVELABLE ET PROCÉDÉ DE FONCTIONNEMENT CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2010 PCT/JP2010/006979**
**30.11.2010 PCT/JP2010/006978**
**30.11.2010 PCT/JP2010/006982**
**28.05.2010 GB 201009012**
**28.05.2010 GB 201009013**

(43) Date of publication of application:
**23.05.2012 Bulletin 2012/21**

(73) Proprietor: **Mitsubishi Heavy Industries, Ltd.**
**Tokyo 108-8215 (JP)**

(72) Inventors:
• **ICHINOSE, Hidekazu**
**Tokyo 108-8215 (JP)**
• **TSUTSUMI, Kazuhisa**
**Tokyo 108-8215 (JP)**
• **SHIMIZU, Masayuki**
**Tokyo 108-8215 (JP)**

• **CALDWELL, Niall**
**Midlothian**
**Lothian EH20 9TB (GB)**
• **DUMNOV, Daniil**
**Midlothian**
**Lothian EH20 9TB (GB)**
• **RAMPEN, William**
**Midlothian**
**Lothian EH20 9TB (GB)**
• **LAIRD, Stephen**
**Midlothian**
**Lothian EH20 9TB (GB)**
• **PAPPALA, Venkata**
**London**
**Greater London W1K 6WL (GB)**

(74) Representative: **Hindle, Alistair Andrew**
**Alistair Hindle Associates Ltd.**
**66 Hanover Street**
**Edinburgh EH2 1EL (GB)**

(56) References cited:
**WO-A1-2007/053036    WO-A1-2010/033035**
**WO-A2-2008/113699    JP-A- 2005 248 738**
**US-A- 4 280 061**

EP 2 454 475 B1

## Description

## Technical Field

This invention relates to a power generating apparatus of renewable energy type which transmits rotation energy of a rotor obtained from a renewable energy source to a generator via a hydraulic transmission having a combination of a hydraulic pump and a hydraulic motor and an operation method of the power generating apparatus of renewable energy type.

## Background Art

In recent years, from a perspective of preserving the environment, it is becoming popular to use a renewable energy type turbine generator such as a wind turbine generator utilizing wind power and a tidal current generator utilizing tidal current.

Such renewable energy devices traditionally employ a transmission in the form of a gearbox to change the slow input speed of an energy extraction mechanism such as the rotor of the wind or tidal turbine generator to which kinetic energy of the renewable energy source is inputted into a fast output speed to drive a power generating apparatus. For example, in a common wind turbine generator, the rotation speed of the rotor is approximately a few rotations to tens of rotations per minute, whereas a rated speed of the power generating apparatus is normally 1500rpm or 1800rpm and thus a mechanical gearbox. Thus, a mechanical gearbox is provided between the rotor and the generator. Specifically, the rotation speed of the rotor is increased to the rated speed of the generator by the gearbox and then inputted to the generator.

Such transmission in the form of the gearbox is challenging to design and build as they are prone to failure and expensive to maintain and replace or repair.

A further challenge in designing power generating apparatuses of renewable energy type is extracting the optimum amount of energy by an energy extraction mechanism in all conditions.

The most effective devices achieve this by holding the blades at a fixed pitch angle, and varying the rotational speed of the blades proportionally to the wind or water speed over the majority of the operating range, so as to maintain a more or less constant 'tip speed ratio'. Gearboxes at the scale required for cost effective power generating apparatuses of renewable energy type are invariably fixed ratio, so complex and failure-prone electronic power conversion is required to provide electricity to an AC electricity network.

In recent years, power generating apparatuses of renewable energy type equipped with a hydraulic transmission adopting a combination of a hydraulic pump and a hydraulic motor of variable displacement type are getting more attention as an alternative to the mechanical gearboxes. In such power generating apparatuses, it is possible to make the hydrostatic transmission variable ratio even at large scales. Such a hydrostatic transmission is also lighter and more robust than a gearbox, and lighter than a direct generator drive unit. Thus, the overall cost of producing electricity is reduced.

A structure of a hydraulic transmission applied to a wind turbine generator is disclosed in Non-Patent Literature 1. The hydraulic transmission includes a hydraulic pump connected to a rotor, a hydraulic motor connected to a generator and a high pressure manifold and a low pressure manifold arranged between the hydraulic pump and the hydraulic motor respectively. Each of the hydraulic pump and motor includes a plurality of cylinders and pistons and changes the displacement by continuously activating and disabling of the working chambers formed between the cylinders and pistons.

Patent Literature 1 discloses an apparatus for regulating the rotation of a rotor of a wind turbine generator. The apparatus includes a rotating shaft driven by the rotor and multistage pumps activated by the rotating shaft. Each stage has intake means coupling a common fluid intake line with the stage and discharge means coupling a common fluid discharge line with the stage. A first constricting means is arranged in the common discharge line from the stage to change the pumping status of the stages. The ratio of cylinders in idling state is changed to adjust torque of the rotating shaft so as to maintain the rotation speed of the rotating shaft within the range in which the rotation energy is effectively converted into wind power energy.

Further, Patent Literature 2 discloses a stable control system for a power generating apparatus such as a wind turbine generator. The stable control system attempts to control the displacement of the hydraulic motor of the hydraulic transmission to stabilize the rotation speed of the generator.

US 4;280,061 discloses an apparatus for generating electricity from wind energy, wherein a wind wheel is connected to drive an energy converter which effects a torque reaction on the wind wheel proportional to the square of the rotational speed of the wheel, so that the wheel may be operated at fixed blade pitch and the blade tip speed will be proportional to the wind speed.

WO 2007/053036 discloses a turbine-driven electric power production system, in which the turbine is connected to a hydrostatic displacement pump further connected to a hydrostatic displacement motor as part of a closed loop hydrostatic transmission system.

## Citation list

## Patent Literature

PTL 1: US 4496847B

PTL 2: WO 2010/0033035A

**Non-Patent Literature**

NPL 1: W.H.S. Rampen, et al., "Gearless transmissions for large wind-turbines - The history and future of hydraulic drives", DEWEK Bremen, Dec. 2006

**Summary of Invention**

**Technical Problem**

In the power generating apparatuses of renewable energy type such as those disclosed in Patent Literatures 1 and 2, it is required to extract energy efficiently from the renewable energy source and to maintain power generation efficiency high. However, the renewable energy source used in such power generating apparatuses are normally natural energy such as wind power and tidal current and energy available for power generation fluctuates significantly. Thus, it is difficult to perform energy extraction at maximum efficiency. Particularly, the renewable energy is highly temporally-unstable in a short period of time and it is necessary to perform the control in response to the fluctuating energy in order to extract energy efficiently.

From the perspective above, in a conventional wind turbine equipped with a gearbox of mechanical type (gear type), an inverter is arranged between a generator and a grid and the rotation speed of the rotor is changed by controlling the inverter. This variable speed operation method is commonly used.

However, in the wind turbine generator having the hydraulic transmission as disclosed in Non-Patent Literature 1 and Patent Literatures 1 and 2, a method of adjusting the torque to improve power generation efficiency is not described in details. Further, it is not yet established as to an operation control technique to improve power generation efficiency.

In view of the problems above, it is an object of the present invention is to provide a power generating apparatus of renewable energy type which can achieve a desired output of the hydraulic motor and a stable power generation regardless of changes of the renewable energy as well as a method of operation such an apparatus.

**Solution to Problem**

The present invention provides a power generating apparatus of renewable energy type which generates power from a renewable energy source. The power generating apparatus in relation to the present invention may include, but is not limited to: a rotating shaft driven by the renewable energy source; a hydraulic pump driven by the rotating shaft; a hydraulic motor driven by pressurized oil supplied from the hydraulic pump; a generator coupled to the hydraulic motor; a high pressure oil line through which a discharge side of the hydraulic pump is in fluid communication with an intake side of the hydraulic motor; a low pressure oil line through which an intake side of the hydraulic pump is in fluid communication with a discharge side of the hydraulic motor; a motor target output determination unit which determines a target output of the hydraulic motor, $POWER_{motor}$ based on a target output of the hydraulic pump, POWER pump; a motor demand determination unit which determines a displacement demand $D_m$ of the hydraulic motor so that a rotation speed of the generator is constant; and a motor controller which adjusts displacement of the hydraulic motor to the determined displacement demand $D_m$.

In the power generating apparatus of renewable energy type, the motor target output determination unit determines a target output of the hydraulic motor, $POWER_{motor}$ based on a target output of the hydraulic pump, $POWER_{pump}$, which a motor control is performed. Therefore, it is possible to achieve the desired output of the hydraulic motor.

The motor demand determination unit determines the displacement demand $D_m$ of the hydraulic motor based on the target output of the hydraulic motor, $POWER_{motor}$ so that the rotation speed of the generator is constant and the motor controller adjusts the displacement of the hydraulic motor to the determined displacement demand $D_m$. Therefore, it is possible to maintain the rotation speed of the generator the same even if the target output of the hydraulic pump is changed. As a result, it is possible to produce electric power having a constant frequency by the generator.

The power generating apparatus of renewable energy type as described above, may further include: a target torque determination unit which determines a target torque of the hydraulic pump $T_p$ based on an ideal torque of the rotating shaft at which a power coefficient becomes maximum; and a pump target output determination unit which determines the target output of the hydraulic pump, $POWER_{pump}$ based on the target torque of the hydraulic pump $T_p$ determined by the target torque determination unit.

In this manner, the target torque determination unit determines the target torque of the hydraulic pump $T_p$ based on the ideal torque of the rotating shaft at which the power coefficient becomes maximum and the pump target output determination unit determines the target output of the hydraulic pump, $POWER_{pump}$ based on the target torque. Therefore, it is possible to maintain the power generation efficiency of the power generating apparatus of renewable energy type high.

The power generating apparatus of renewable energy as described above may also include a rotation speed meter which measures a rotation speed of the rotating shaft, and an ideal torque determination unit which determines the ideal torque of the rotating shaft in accordance with the measured rotation speed of the rotating shaft.

In the power generating apparatus of renewable energy type, the ideal torque is obtained based on the measured rotation speed of the rotating shaft measured by the rotation speed meter, thereby achieving power generation efficiency of the power generating apparatus of renewable energy type. The rotation speed meter can measure the rotation speed of the rotating shaft with high accuracy, and thus, the hydraulic motor can be controlled appropriately by determining the ideal torque based on the measured rotation speed of the rotating shaft.

In the power generating apparatus of renewable energy type, a plurality of the rotation speed meters may be provided, and the ideal torque determination unit may determine the ideal torque of the rotating shaft in accordance with an average of the rotation speeds of the rotating shaft measured by the rotation speed meters.

In this manner, a plurality of the rotation speed meters are provided and the ideal torque is obtained based on the average of the measured rotation speeds of the rotating shaft, thereby improving the accuracy of determining the ideal torque and also removing the noise due to the rotation speed meters themselves, external factors or the like.

Alternatively, the power generating apparatus of renewable energy type may also include a rotation speed meter which measures a rotation speed of the rotating shaft and an ideal torque determination unit which determines the ideal torque of the rotating shaft in accordance with an estimated speed of energy flow of the renewable energy source estimated from the measured rotation speed of the rotating shaft.

In this manner, the ideal torque is obtained in accordance with the estimated speed of the energy flow of the renewable energy source estimated from the measured rotation speed of the rotating shaft, thereby improving the power generation efficiency of the power generating apparatus of renewable energy type. The speed of the energy flow of the renewable energy source is estimated from the measured rotation speed of the rotating shaft measured by the rotation speed meter, thereby estimating the speed of the energy flow with high accuracy and also controlling the hydraulic motor appropriately. Further, the power generating apparatus may be configured without the speed meters for measuring the speed of the energy flow, thereby reducing the cost.

In the power generating apparatus of renewable energy type, a plurality of the flow speed meters may be provided, and the estimated flow speed of the energy flow may be estimated from an average of the rotation speeds of the rotating shaft measured by the rotation speed meters.

In this manner, a plurality of the rotation speed meters are provided, the flow speed of the energy flow is estimated from the average of the rotation speeds of the rotating shaft measured by the rotation speed meters and the ideal torque is obtained from the flow speed of the energy flow. As a result, the ideal torque can be determined with high accuracy and the noise due to the rotation speed meters themselves, external factors or the like can be removed.

Alternatively, the power generating apparatus of renewable energy type may also include a speed meter which measures a speed of energy flow of the renewable energy source, and an ideal torque determination unit which determines the ideal torque of the rotating shaft in accordance with the measured speed of the energy flow.

In this manner, the ideal torque is determined based on the flow speed of the renewable energy source measured by the speed meter, thereby improving the power generation efficiency of the power generating apparatus of renewable energy type. Further, the speed of the energy flow is obtained easily by measuring the speed of the energy flow directly by the speed meter.

In the power generating apparatus of renewable energy type, a plurality of the speed meters may be provided and the ideal torque determination unit may determine the ideal torque of the rotating shaft in accordance with an average of the speeds of the energy flow measured by the speed meters.

In this manner, a plurality of the speed meters are provided and the ideal torque is obtained based on the average of the measured speeds of the energy flow measured by the speed meters, thereby improving the accuracy of determining the ideal torque and also removing the noise due to the rotation speed meters themselves, external factors or the like.

The power generating apparatus of renewable energy type may further include a pump target output correction unit which corrects the target output of the hydraulic pump, $POWER_{pump}$ based on a power requirement instruction from a farm controller of a power generation farm to which the power generating apparatus of renewable energy type belongs.

Normally, more than one power generating apparatus of renewable energy type is installed in the power generation farm to which the power generating apparatus belongs to. For instance, the output of the power generation required for each of the power generating apparatuses varies depending on conditions such as an operation state of each power generating apparatus in the power generation farm and electrical power required for the power generation farm overall. Therefore, the pump target output correction unit corrects the target output of the hydraulic pump, $POWER_{pump}$ based on the power requirement instruction from the farm controller of the power generation farm. As a result, the power generation can be performed appropriately in accordance with the power required by the power generating apparatus of renewable energy type.

In the power generating apparatus of renewable energy type, the motor target output determination unit may include a low-pass filter which smoothes the target output of the hydraulic pump, $POWER_{pump}$ to obtain the target output of the hydraulic motor, $POWER_{motor}$.

In this manner, the target output of the hydraulic motor, $POWER_{motor}$ is obtained by smoothing the target output of the hydraulic pump, $POWER_{pump}$. As a result, even when the output of the hydraulic pump changes drastically, the target output of the hydraulic motor can be changed smoothly, thereby achieving a stable operation of the generator.

In the power generating apparatus of renewable energy type, the motor demand determination unit may determine the displacement demand $D_m$ of the hydraulic motor based on a nominal motor demand $D_n$ that is obtained by dividing the target output of the hydraulic motor, $POWER_{motor}$ by a rotational speed $W_m$ of the hydraulic motor and an oil pressure $P_s$ in the high pressure oil line.

In this manner, the motor demand determination unit determines the nominal demand $D_n$ of the hydraulic motor by dividing the target output of the hydraulic motor, $POWER_{motor}$ by the oil pressure $P_s$ in the high pressure oil line, thereby obtaining the nominal motor demand $D_n$ that maintains the rotation speed of the generator constant.

Further, in the power generating apparatus of renewable energy, the motor demand determination unit may obtain a demand correction $D_b$ for adjusting the oil pressure $P_s$ in the high pressure oil line toward a target oil pressure $P_d$ that is determined based on the target output of the hydraulic motor, $POWER_{motor}$, and the motor demand determination unit may determine the displacement demand $D_m$ of the hydraulic motor from a sum of the nominal motor demand $D_n$ and the demand correction $D_b$.

In this manner, the motor demand determination unit obtains the demand correction $D_b$ of the hydraulic motor for adjusting the oil pressure $P_s$ in the high pressure oil line, and the obtained demand correction $D_b$ is added to the nominal motor demand $D_n$ to determine the displacement demand $D_m$ of the hydraulic motor. As a result, the oil pressure $P_s$ in the high pressure oil line is adjusted closer to the target pressure $P_d$ positively.

In such case, the motor demand determination unit may obtain the demand correction $D_b$ by multiplying a difference between the oil pressure $P_s$ and the target oil pressure $P_d$ by a variable gain $K_p$ that is variable in accordance with the oil pressure $P_s$.

In this manner, when obtaining the demand correction $D_b$ of the hydraulic motor, the oil pressure $P_s$ in the high pressure oil line can be closer to the target torque $P_d$ by setting appropriately the variable gain $K_p$ that is variable in accordance with the oil pressure $P_s$. Meanwhile, the variable gain $K_p$ changes in accordance with the oil pressure $P_s$, thereby achieving the tracking performance in accordance with the pressure $P_s$.

Furthermore, the variable gain $K_p$ may be set so that: when the oil pressure $P_s$ is not higher than a minimum $P_{min}$ of a tolerance range of the oil pressure in the high pressure oil line (hereinafter called "high oil pressure") or not lower than a maximum $P_{max}$ of the tolerance range, the variable gain $K_p$ is a maximum value $K_{max}$; and when the oil pressure $P_s$ is between the minimum $P_{min}$ and the maximum $P_{max}$ of the tolerance range of the high oil pressure, the closer to the minimum $P_{min}$ or the maximum $P_{max}$ the oil pressure $P_s$ becomes, the more the variable gain $K_p$ increases.

In this manner, the oil pressure $P_s$ in the high

pressure oil line can be held within the tolerance range and the demand correction $D_b$ of the hydraulic motor can be appropriately determined depending on whether or not the demand displacement $D_m$ of the hydraulic motor needs to be corrected.

Specifically, when the oil pressure $P_s$ is not higher than a minimum $P_{min}$ of a tolerance range of the high oil pressure or not lower than a maximum $P_{max}$ of the tolerance range, the variable gain $K_p$ is a maximum value $K_{max}$. Therefore, it is possible to accelerate the speed of bringing the high oil pressure to the target pressure as fast as possible. Whereas, when the oil pressure $P_s$ is between the minimum $P_{min}$ and the maximum $P_{max}$ of the tolerance range of the high oil pressure, the closer to the minimum $P_{min}$ or the maximum $P_{max}$ the oil pressure $P_s$ becomes, the more the variable gain $K_p$ increases. Therefore, it is possible to reduce the influence of the variable gain $K_p$ when the oil pressure $P_s$ in the high pressure oil line is appropriate and to increase the influence of the variable gain $K_p$ gradually as desired.

The minimum $P_{min}$ of the tolerance range may be determined based on a rotation speed of the rotating shaft and a maximum displacement $D_{max}$ that is settable for the hydraulic pump.

In this manner, the minimum $P_{min}$ of the tolerance range is determined based on the rotation speed of the rotating shaft and the maximum displacement $D_{max}$ that is settable for the hydraulic pump, thereby appropriately setting the minimum $P_{min}$ of the tolerance range that is an important factor for the motor control.

The power generating apparatus of renewable energy type may further include an ambient temperature sensor which measures ambient temperature of the power generating apparatus. The ideal torque of the rotating shaft is preferably corrected based on the measured ambient temperature.

Normally, the density of the renewable energy source changes with the temperature in the power generating apparatus of renewable energy type. Thus, the ambient temperature sensor measures the ambient temperature of the power generating apparatus and the ideal torque is corrected based on the measured ambient temperature, thereby obtaining an optimal ideal torque in accordance with the ambient temperature.

The power generating apparatus of renewable energy type may also include an oil temperature sensor which measures an oil temperature in the high pressure oil line and a motor demand correction unit which corrects the displacement demand $D_m$ of the hydraulic motor based on the measured oil temperature in the high pressure oil line.

In this manner, the pump demand correction unit corrects the displacement demand $D_m$ of the hydraulic motor based on the measured oil temperature in the high pressure oil line measured by the oil temperature sensor. As a result, the hydraulic motor can be properly controlled considering thermal expansion of the oil.

Preferably, the power generating apparatus of renewable energy type is a wind turbine generator which generates power from wind as the renewable energy source. The wind power energy fluctuates significantly in the wind power generator. However, with use of the power generating apparatus of renewable energy, it is possible to perform the motor control in accordance with changes of the wind power energy, thereby achieving the desired output of the hydraulic motor and stable power generation.

As a method of operating the power generating apparatus of renewable energy type which comprises: a rotating shaft driven by the renewable energy source; a hydraulic pump driven by the rotating shaft; a hydraulic motor which is driven by pressurized oil supplied from the hydraulic pump; a generator coupled to the hydraulic motor; a high pressure oil line through which a discharge side of the hydraulic pump is in fluid communication with an intake side of the hydraulic motor; and a low pressure oil line through which an intake side of the hydraulic pump is in fluid communication with a discharge side of the hydraulic motor, the method may include, but is not limited to, the steps of: determining a target output of the hydraulic motor, $POWER_{motor}$ based on a target output of the hydraulic pump, $POWER_{pump}$; determining a displacement demand $D_m$ of the hydraulic motor so that a rotation speed of the generator is constant; and adjusting displacement of the hydraulic motor to the determined displacement demand $D_m$.

In the method of operating the power generating apparatus of renewable energy type, the target output of the hydraulic motor, $POWER_{motor}$ is determined based on a target output of the hydraulic pump, $POWER_{pump}$, based on which the motor control is performed. Therefore, it is possible to obtain the desired output of the hydraulic pump.

The displacement demand $D_m$ of the hydraulic motor is determined based on the target output of the hydraulic motor, $POWER_{motor}$ so that the rotation speed of the generator is constant and the motor controller adjusts the displacement of the hydraulic motor to the determined displacement demand $D_m$. Therefore, it is possible to maintain the rotation speed of the generator the same even when the target output of the hydraulic pump is changed. As a result, it is possible to produce electric power having a constant frequency by the generator.

**Advantageous Effects of Invention**

According to the present invention, the motor target output determination unit determines the target output of the hydraulic motor, $POWER_{motor}$ based on the target output of the hydraulic pump, $POWER_{pump}$ based on which the motor control is performed. As a result, it is possible to obtain the desired output of the hydraulic pump.

Further, the motor demand determination unit determines the displacement demand $D_m$ of the hydraulic motor based on the target output of the hydraulic motor,

$POWER_{motor}$ so that the rotation speed of the generator is constant, and the motor controller adjusts the displacement of the hydraulic motor to the determined displacement demand $D_m$. Therefore, it is possible to maintain the rotation speed of the generator constant even when the target output of the hydraulic pump is changed. As a result, it is possible to produce electric power having a constant frequency by the generator.

Brief Description of Drawings

[fig.1]Fig. 1 is a schematic view of an example structure of a wind turbine generator.
[fig.2]Fig. 2 is a schematic view of a structure of a hydraulic transmission, a generator and a control unit of a wind turbine generator.
[fig.3]Fig. 3 is an illustration of a detailed structure of the hydraulic pump.
[fig.4]Fig. 4 is an illustration of a detailed structure of the hydraulic motor.
[fig.5]Fig. 5 is a flow chart showing a process of controlling of a hydraulic pump by the control unit.
[fig.6]Fig. 6 is a schematic of a signal flow of the control unit.
[fig.7]Fig. 7 is a graph showing a relationship between torque and rotation speed.
[fig.8]Fig. 8 is a graph showing an example of a gain function.
[fig.9]Fig. 9 is a graph showing target pressure functions of the oil in the high pressure oil line.
[fig.10]Fig. 10 is a graph showing a Cp maximum curve stored in a memory unit.
[fig.11]Fig. 11 is a graph showing a Cp maximum curve stored in a memory unit.

**Description of Embodiments**

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

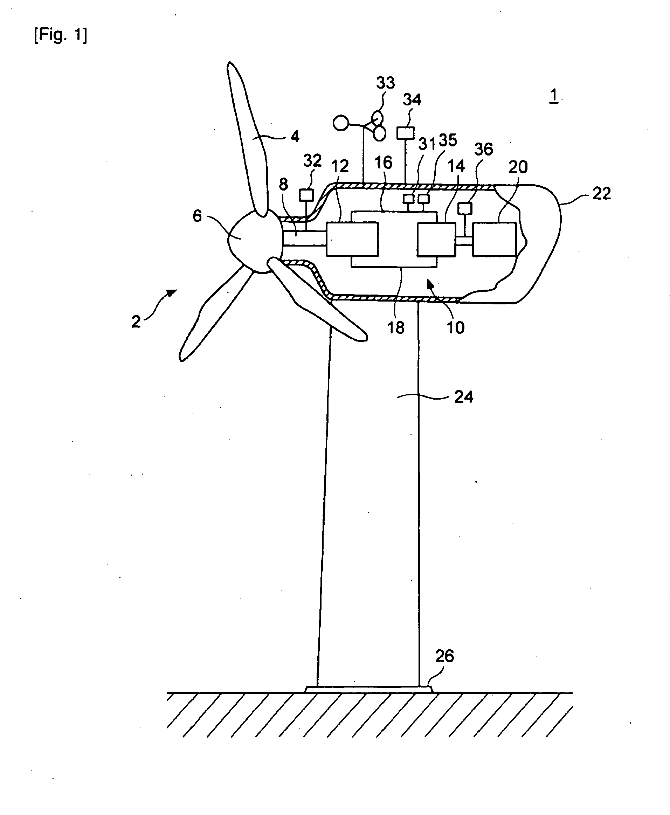

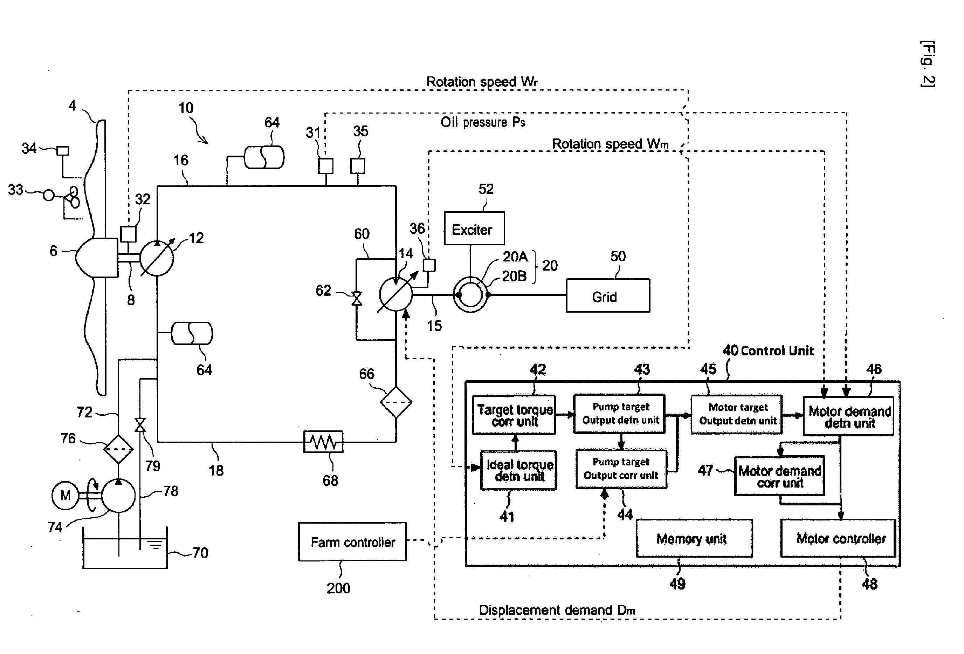

Fig. 1 is an illustration of an example structure of a wind turbine generator. Fig. 2 is a schematic view of a structure of a hydraulic transmission, a generator and a control unit of a wind turbine generator.

As illustrated in Fig. 1, the wind turbine generator 1 includes a rotor 2 rotated by the wind, a hydraulic transmission 10 for increasing rotation speed of the rotor 2, a generator 20 for generating electric power, a nacelle 22, a tower 24 for supporting the nacelle 22, a control unit 40 (see Fig. 2) for controlling the hydraulic transmission 10 of the wind turbine generator 1 and a variety of sensors including a pressure meter 31 and a rotation speed meter 32, 36.

The rotor 2 is configured such that a rotating shaft 8 is connected to a hub 6 having blades 4. Specifically, three blades 4 extend radially from the hub 6 and each of the blades 4 is mounted on the hub 6 connected to the rotating shaft 8. This allows the power of the wind acting on the blades 4 to rotate the entire rotor 2, and the rotation of the rotor 2 is inputted to the hydraulic transmission 10 via the rotating shaft 8.

As illustrated in Fig. 2, the hydraulic transmission 10 includes a hydraulic pump 12 of a variable displacement type which is rotated by the rotating shaft 8, a hydraulic motor 14 of a variable displacement type which is connected to the generator 20, and a high pressure oil line 16 and a low pressure oil line 18 which are arranged between the hydraulic pump 12 and the hydraulic motor 14.

The high pressure oil line 16 connects a discharge side of the hydraulic pump 12 to an intake side of the hydraulic motor 14. The low pressure oil line 18 connects an intake side of the hydraulic pump 12 to a discharge side of the hydraulic motor 14. The operating oil (low pressure oil) discharged from the hydraulic pump flows into the hydraulic motor via the high pressure oil line. The operating oil having worked in the hydraulic motor 14 flows into the hydraulic pump 12 via the low pressure oil line 18 and then the pressure thereof is raised by the hydraulic pump 12 and finally the operating oil flows into the hydraulic motor 14 so as to drive the hydraulic motor 14.

Fig. 2 illustrates an exemplary embodiment in which the hydraulic transmission 10 includes only one hydraulic motor 14. However, it is also possible to provide a plurality of hydraulic motors 14 and connect each of the hydraulic motors 14 to the hydraulic pump 12.

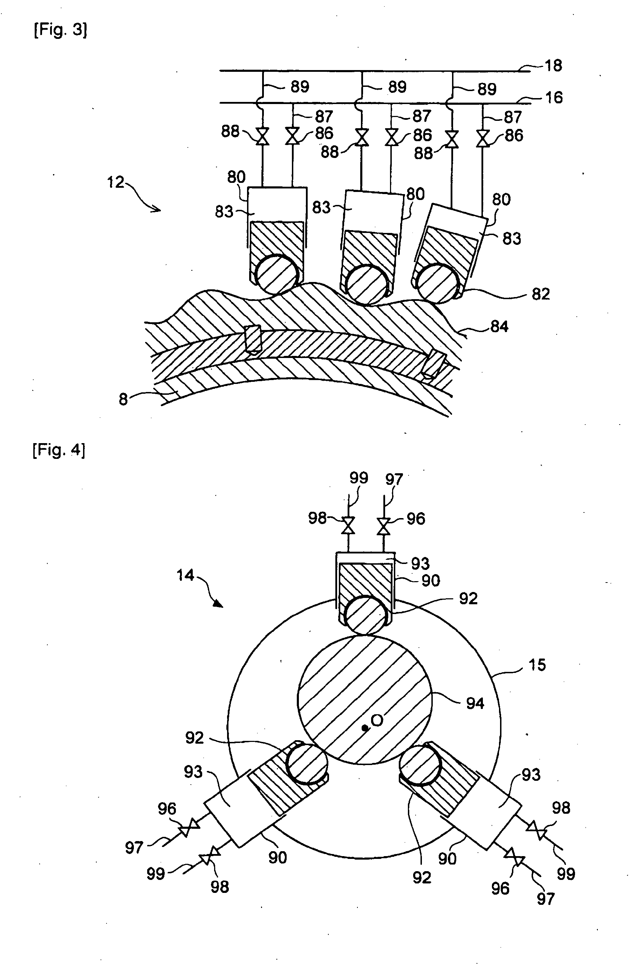

The detailed structure of the hydraulic pump and the hydraulic motor is described here as an example. Fig. 3 is a detailed structure of the hydraulic pump and Fig. 4 is a detailed structure of the hydraulic motor.

As shown in Fig. 3, The hydraulic pump 12 includes a plurality of oil chambers 83 each of which is formed by a cylinder 80 and a piston 82, a cam 84 having a cam profile which is in engagement with the piston 82 and a high pressure valve 86 and a low pressure valve 88 which are provided for each of the oil chambers 83.

The high pressure valve 86 is arranged in a high pressure communication path 87 between the high pressure oil line 16 and each of the oil chambers 83 and the low pressure valve 88 is arranged in a low pressure communication path 89 between the low pressure oil line 18 and each of the oil chambers 83.

In the hydraulic pump 12, the cam 84 rotates with the rotating shaft 8 and the pistons 82 is periodically moved upward and downward in accordance with a cam curve to repeat a pump cycle of the pistons 82 starting from the bottom dead center and reaching the top dead center and a intake cycle of the pistons starting from the top dead center and reaching the bottom dead center.

As illustrated in Fig. 4, the hydraulic motor 14 includes a plurality of hydraulic chambers 93 formed between cylinders 90 and pistons 92, a cam 94 having a cam profile which engages with the pistons 92, and a high pressure valve 96 and a low pressure valve 98 that are provided for each of the hydraulic chambers 93.

The high pressure valve 96 is arranged in a high pressure communication path 97 between the high pressure oil line 16 and each of the oil chambers 93, whereas the low pressure valve 98 is arranged in a low pressure communication path 99 between the low pressure oil line 18 and each of the oil chambers 93. The low pressure valve 98 could be a normally closed type.

In the hydraulic motor 14 as shown with a piston cycle curve 130, the pistons 92 is periodically moved upward and downward to repeat a motor cycle of the pistons 92 starting from the top dead center and reaching the bottom dead center and a discharge cycle of the pistons starting from the bottom dead center and reaching the top dead center.

The hydraulic pump and the hydraulic motor are piston-type as described above. However, this is not limitative and the hydraulic pump and the hydraulic motor may be any type of hydraulic mechanisms of variable displacement type such as vane-type.

As illustrated in Fig. 2, a rotation speed meter 32 for measuring the rotation speed of the rotating shaft 8, a pressure meter 31 for measuring the pressure in the high pressure oil line 16 and another rotation speed meter 36 for measuring a rotation speed of the hydraulic motor 14 are provided as the variety of sensors. Furthermore, it is possible to provide, as the variety of sensors, an anemometer 33 which is installed outside the nacelle 22 and measures the wind speed, a temperature sensor 34 for measuring ambient temperature of the wind turbine generator 1 and an oil temperature sensor 35 which measures an oil temperature in the high pressure oil line 16. The measurement results of such sensors are sent to the control unit 40 to control the hydraulic pump 12. The example in which one set of each of the sensors is provided is illustrated in the drawing. However, this is not limitative and it is possible to provide more than one set of each of the sensors.

Furthermore, an anti-pulsation accumulator 64 is provided for the high pressure oil line 16 and the low pressure oil line 18. By this, the pressure fluctuation (pulsation) of the high pressure oil line 16 and the low pressure oil line 18 is suppressed. Moreover, an oil filter 66 for removing impurities from the operating oil and an oil cooler 68 for cooling the operating oil are arranged in the low pressure oil line.

A bypass oil line 60 is arranged between the high pressure oil line 16 and the low pressure oil line 18 to bypass the hydraulic motor 14 and a relief valve 62 is arranged in the bypass oil line 60 to maintain hydraulic pressure of the high pressure oil line 16 not more than a set pressure. By this, the relief valve 62 automatically opens when the pressure in the high pressure oil line 16 reaches the set pressure of the relief valve 62, and the high pressure oil is allowed to escape to the low pressure oil line 18 via the bypass line 60.

Further, the hydraulic transmission 10 has an oil tank 70, a supplementary line 72, a boost pump 74, an oil filter 76, a return line 78 and a low pressure relief valve 79.

In some embodiments all or part of the return flow from the hydraulic motor 14 passes through one or more of these units.

The oil tank 70 stores supplementary operating oil. The supplementary line 72 connects the oil tank 70 and the low pressure oil line 18. The boost pump 74 is arranged in the supplementary line 72 so as to replenish the low pressure oil line 18 with the supplementary operating oil from the oil tank 70. In such a case, the oil filter 76 arranged in the supplementary line 72 removes impurities from the operating oil to be supplied to the low pressure oil line 18.

Even when the operating oil leaks in the hydraulic transmission 10, the boost pump 74 replenishes the low pressure oil line with the operating oil from the oil tank 70 and thus, the amount of the operating oil circulating in the hydraulic transmission 10 can be maintained.

The return line 78 is installed between the oil tank 70 and the low pressure oil line 18. The low pressure relief valve 79 is arranged in the return line 78 and the pressure in the low pressure oil line 18 is maintained near the prescribed pressure.

This enables the low pressure relief valve 79 to open automatically to release the operation oil to the oil tank 70 via the return line 88 once the pressure in the low pressure oil line 18 reaches the prescribed pressure of the low pressure relief valve 79, although the boost pump 74 supplies the operating oil to the low pressure oil line 18. Thus, the amount of the operating oil circulating in the hydraulic transmission 10 can be adequately maintained.

The generator 20 is synchronized with the grid 50 such that the electric power generated by the generator 20 is supplied to the grid 50. As Fig. 2 shows, the generator 20 includes an electromagnetic synchronous generator which is constituted of a rotor 20A connected to the output shaft 15 of the hydraulic motor 14 and another rotor 20B connected to the grid 50. An exciter 52 is connected to the rotor 20A of the generator 20 so that the power factor of the electric power generated in the rotor 20B of the generator 20 can be regulated by changing a field current flowing in the rotor 20A. By this, it is possible to supply to the grid 50 the electric power of good quality which is adjusted to the desired power factor.

The nacelle 22 shown in Fig. 1 supports the hub 6 of the rotor 2 rotatably and houses a variety of devices such as the hydraulic transmission 10 and the generator 20. Further, the nacelle 22 may be rotatably supported on the tower 24 and be turned by a yaw motor (not shown) in accordance with the wind direction.

The tower 24 is formed into a column shape extending upward from a base 26. For instance, the tower 22 can be constituted of one column member or a plurality of units that are connected in a vertical direction to form a column shape. If the tower 24 is constituted of the plurality of units, the nacelle 22 is mounted on the top-most unit.

The structure of the control unit 40 is explained in reference to Fig. 2. The control unit 40 may construct a distributed control system configured such that the control unit 40 and a variety of control devices 41 to 49 may be arranged in different locations, inside or outside of the nacelle. It is possible to incorporate into a processing unit, at least one of functions of the control unit 40 and the control devices 41 to 47 constituting the control unit 40.

The control unit 40 includes an ideal torque determination unit 41, a target torque determination unit 42, a pump target output determination unit 43, a pump target output correction unit 44, a motor target output determination unit 45, a motor demand determination unit 46, a motor demand correction unit 47, a motor controller 48 and a memory unit 49.

The ideal torque determination unit 41 determines the ideal torque of the rotating shaft 8 in accordance with the measured rotation speed of the rotating shaft 8. The ideal torque is torque at which wind power energy can be converted efficiently into rotation energy of the rotating shaft 8, i.e. torque with high extraction efficiency from the wind power energy.

An example structure of the ideal torque determination unit 41 is described below in details.

The ideal torque determination unit 41 determines the ideal torque at which the power coefficient $C_p$ becomes maximum based on the measured rotation speed of the rotating shaft 8 measured by the rotation speed meter 32. It is also possible to determine the ideal torque of the rotating shaft 8 in accordance with an average of the rotation speeds of the rotating shaft 8 measured by the rotation speed meters 32.

The ideal torque determination unit 41 may correct the ideal torque of the rotating shaft 8 based on the measured ambient temperature of the wind turbine generator 1 measured by the ambient temperature sensor 34. The ambient temperature of the wind turbine generator 1 is one of the factors that influence the torque of the rotating shaft 8. Technically, the wind power energy is determined from a wind flow rate (mass flow rate) and the wind speed. With changing of the ambient temperature of the wind turbine generator 1, air density changes. This changes the mass of the air. Therefore, the ideal torque is corrected based on the ambient temperature of the wind turbine generator 1.

The target torque determination unit 42 determines the target torque of the hydraulic pump based on the ideal torque obtained by the ideal torque determination unit 41. Meanwhile, the target torque determination unit 42 preferably determines the target torque of the hydraulic pump 12 by multiplying the ideal troque of the rotating shaft 8 by the scale factor M.

The pump target output determination unit 43 determines the target output of the hydraulic pump, $POWER_{pump}$ based on the target torque of the hydraulic pump. Meanwhile, the pump target output determination unit 43 may determine the target output of the hydraulic pump 12, $POWER_{pump}$ by multiplying the target torque of the hydraulic pump 12 determined by the target torque determination unit 42 by the measured rotation speed of the rotating shaft 8.

The pump target output correction unit 44 corrects the target output of the hydraulic pump 12, $POWER_{pump}$ determined by the pump target output determination unit 43, based on a power requirement instruction $S_d$ from a farm controller 200. The farm controller 200 is a controller which is installed in a power generation farm where the power generating apparatus belongs and which controls more than one power generating apparatus overall.

The motor target output determination unit 45 determines the target output of the hydraulic motor 14, $POWER_{motor}$ based on the target output of the hydraulic pump, $POWER_{pump}$. For instance, the motor target output determination unit 45 may include a first-order low pass filter which determines the target output of the hydraulic motor, $POWER_{motor}$ by smoothing the target output of the hydraulic pump 12, $POWER_{pump}$.

The motor demand output determination unit 46 determines a displacement demand $D_m$ of the hydraulic motor 14 based on the target output of the hydraulic motor 14, $POWER_{motor}$ so that a rotation speed of the generator is constant.

Specifically, the motor demand output determination unit 46 determines the displacement demand $D_m$ of the hydraulic motor based on a nominal demand $D_n$ that is obtained by dividing the target output $POWER_{motor}$ by the rotation speed of the hydraulic motor 14 and the oil pressure $P_s$ in the high pressure oil line.

Meanwhile, the motor demand determination unit 46 may correct the displacement demand $D_m$ so that the oil pressure $P_s$ is held within a prescribed range. In such case, the motor demand determination unit 46 determines the displacement demand $D_m$ of the hydraulic motor from the sum of the nominal demand $D_n$ and a demand correction $D_b$ of the hydraulic motor 14 for adjusting the oil pressure $P_s$ in the high pressure oil line to the target pressure $P_d$ in the high pressure oil line determined based on the target output $POWER_{motor}$.

Herein, it is also possible to obtain the demand correction $D_b$ of the hydraulic motor 14 in the following manner.

The demand correction $D_b$ is obtained by multiplying a difference between the oil pressure $P_s$ and the target oil pressure $P_d$ by a variable gain $K_p$ that is variable in accordance with the oil pressure $P_s$.

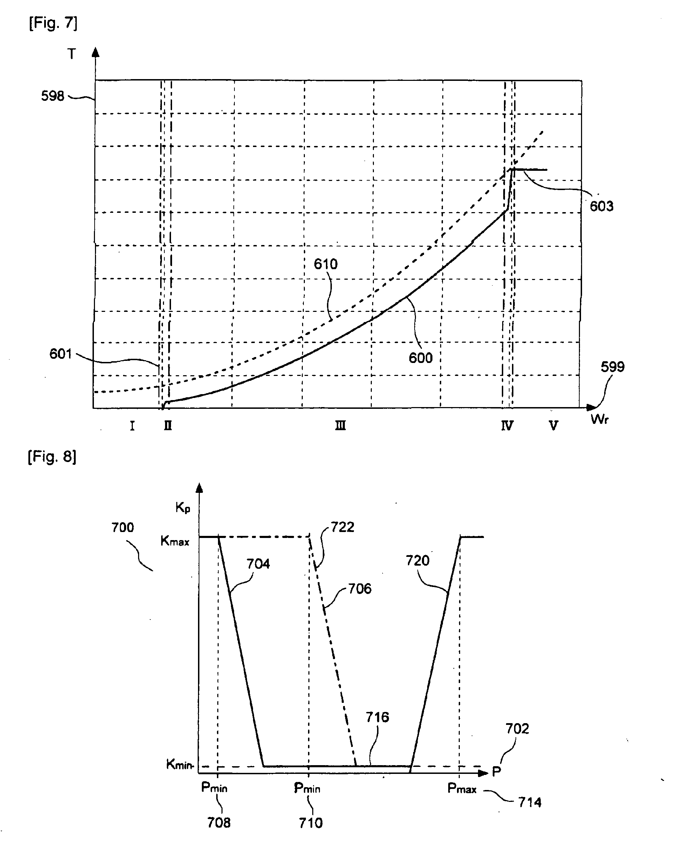

As shown in Fig. 8, the variable gain $K_p$ is preferably set so that: when the oil pressure $P_s$ is not higher than a minimum $P_{min}$ of a tolerance range of the high oil pressure or not lower than a maximum $P_{max}$ of the tolerance range, the variable gain $K_p$ is a maximum value $K_{max}$; and when the oil pressure $P_s$ is between the minimum $P_{min}$ and the maximum $P_{max}$ of the tolerance range of the high oil pressure, the closer to the minimum $P_{min}$ or the maximum $P_{max}$ the oil pressure $P_s$ becomes, the more the variable gain $K_p$ increases. The tolerance range may be determined based on the rotation speed of the rotating shaft 8 and the maximum value $D_{max}$ that is settable for the hydraulic pump 12.

The motor demand correction unit 47 corrects the displacement demand $D_m$ of the hydraulic motor 14 based on the measured oil temperature in the high pressure oil line 16 measured by the oil temperature sensor 35. Although not required, the motor demand correction unit 47 may be installed, thereby controlling the hydraulic motor 16 properly with the thermal expansion rate of the working fluid in mind.

The motor controller 48 adjust the displacement of the hydraulic motor 14 to the determined displacement demand $D_m$ determined by the motor demand determination unit 46.

In addition to the control devices described above, a pump controller (not shown) may be provided. The pump controller adjusts the displacement of the hydraulic pump 12 to the determined displacement demand of the hydraulic pump 12 determined from the target torque obtained by the target torque determination unit 42 and the oil pressure $P_s$.

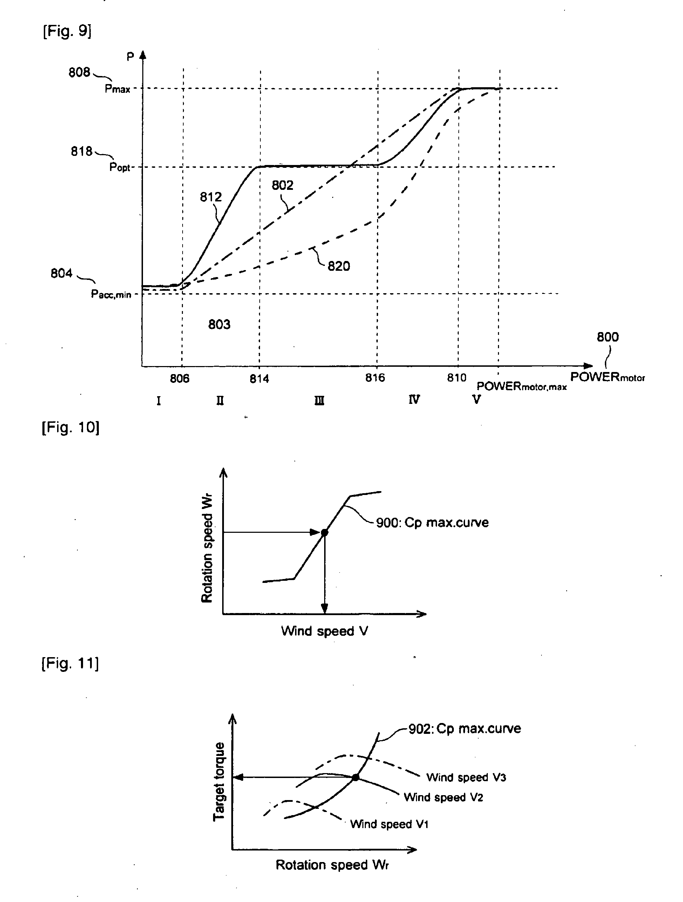

The memory unit 49 stores data used for controlling the hydraulic pump 12. Specifically, the memory unit 49 stores a variety of functions used for controlling the wind turbine generator 1, such as a function of a relationship between torque and rotation speed as shown in Fig. 7, a function of the variable gain $K_p$ as shown in Fig. 8 and a target pressure function of a target high oil pressure as shown in Fig. 9.

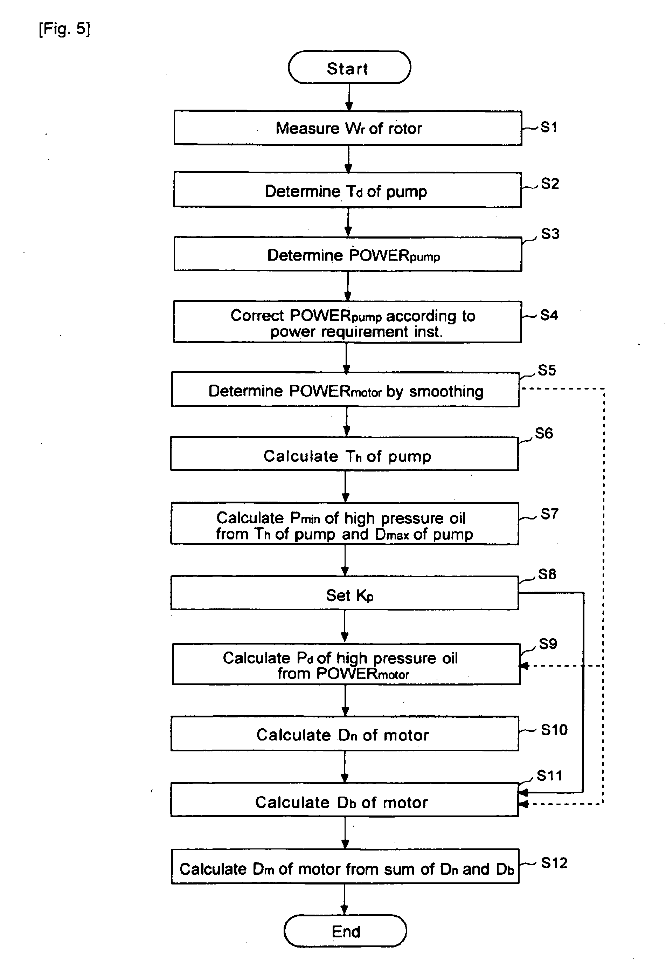

The algorithm relating to the operation of the control unit 40 is described in reference to the flow chart of Fig. 5.

First, the rotation speed meter 38 measures the rotation speed $W_r$ of the rotating shaft 8 (Step S1). The ideal torque determination unit 41 determines the ideal torque $T_i$ at which the power coefficient Cp becomes maximum in accordance with the measured rotation speed $W_r$ measured by the rotation speed meter 38. Specifically, the ideal torque determination unit 41 retrieves from the memory unit 49 the CP maximum curve 600 indicated with a solid line in the function of Fig. 7. The Cp maximum curve 600 is the function of the relationship between the aerodynamic ideal torque (T, 598) and the rotation speed of the rotating shaft ($W_r$, 599). The Cp maximum curve 600 shows the ideal torque $T_i$ at which the power coefficient Cp becomes maximum with respect to the rotation speed $W_r$.

The target torque determination unit 42 determines the target torque $T_d$ of the hydraulic pump 12 based on the ideal torque $T_i$ obtained by the ideal torque determination unit 41 (Step S2). Meanwhile, the target torque determination unit 42 determines an adjusted ideal torque $MT_i$ by multiplying the ideal torque $T_i$ determined by the ideal torque determination unit 41 by the scale factor M which can be used as the target torque $T_d$. The scale factor M is typically between 0.9 and 1.0 and may vary during use, according to wind conditions and aerodynamic changes of the blade 4 over time. The scale factor M may be inputted from the farm controller 200 as desired. It is a precondition that the torque applied to the rotating shaft 8, in the case of M<1, has a value slightly smaller than the ideal torque. The rotation speed of the rotating shaft 8 increases slightly for the corresponding amount in comparison to the case of the ideal torque. Therefore, it is possible to adjust the rotation speed of the rotating shaft 8 in response to rapid changes of the wind speed. It is a precondition that the gust is not more than the upper limit of the permissible wind speed range of the wind turbine generator 1. The permissible wind speed range is a range of the wind speed where the rotor 2 can normally operate without causing it to over-rotate, and is usually set higher than the upper limit of the rated wind speed range.

With the structure described above, the ideal torque is slightly off the optimal torque in lulls (M=1). However, the rotation energy converted from the wind power energy in gusts is much higher than in lulls. Thus, the available power is very much higher as the wind turbine generator overall. It is very beneficial to adopt the above structure.

The target torque determination unit 42 may correct the ideal torque $T_i$ based on the ambient temperature of the wind turbine generator 1 measured by the ambient temperature sensor 34. Such correction may be conducted by, for instance, storing the function of the correction value of the ideal torque $T_i$ and the ambient temperature in the memory unit, obtaining the correction value of the ideal torque $T_i$ in accordance with the ambient temperature, and adding the obtained correction value to the ideal torque $T_i$. Alternatively, the correction may be conducted by preparing more than one Cp maximum curve 600 corresponding to the ambient temperature, selecting an appropriate Cp maximum curve 600 in accordance with the ambient temperature, and determining the target torque based on the ideal torque $T_i$ obtained from the selected Cp maximum curve 600. Technically, the wind power energy is determined from a wind flow rate (mass flow rate) and the wind speed. With changing of the ambient temperature of the wind turbine generator 1, air density changes: This changes the mass of the air. Therefore, the ideal torque $T_i$ is corrected based on the ambient temperature of the wind turbine generator 1 so as to obtain the appropriate ideal torque in accordance with the ambient temperature.

Next, the pump target output determination unit 43 determines the target output of the hydraulic pump, POWER$_{pump}$ by multiplying the rotation speed $W_r$ of the rotating shaft 8 measured by the rotation speed meter 32 by the ideal torque $T_i$ or the adjusted ideal torque $MT_i$ (Step S3). The target output of the hydraulic pump, POWER$_{pump}$ may be determined based on hydraulic information such as a selected net rate of displacement of the hydraulic pump 12 and the oil pressure $P_s$ in the high pressure oil line.

The pump target output correction unit 44 may correct the target output of the hydraulic pump, POWER$_{pump}$ based on an output correction value POWER$_{correction}$ obtained from the power requirement instruction $S_d$ from the farm controller 200 (Step 4).

Normally, more than one wind turbine generator 1 is installed in the wind farm and the farm controller 200 is provided to control the wind turbine generators 1 overall. The farm controller 200 is capable of communicating with more than one wind turbine generator 12. The farm controller 200 receives a variety of measurement signals from the wind turbine generators 1 and sends a variety of control signals to the wind turbine generators 1.

For instance, the measurement signals are measurement signals from the measuring devices 31 to 36, such as the oil pressure $P_s$ in the high pressure oil line, the rotation speed $W_r$ of the rotating shaft 8, the rotation speed $W_m$ of the hydraulic motor 14, the wind speed around the wind turbine generator 1 or the ambient temperature, and the oil temperature of the working fluid.

The control signals include the power requirement instruction $S_d$. The power requirement instruction $S_d$ is a signal that relates to power demand allotted to each of the wind turbine generators from the power demand for the wind farm overall.

The power demand for each of the wind turbine generators 1 may be set so that constant power output is obtained or the power is produced with high efficiency as the wind farm overall, or with the consideration of changes such as power output of other wind turbine generator(s) and the high oil pressure.

The motor target output determination unit 45 determines the target output of the hydraulic motor 14, POWER$_{motor}$ by smoothing the target output of the hydraulic pump 12, POWER$_{pump}$ by means of a first-order low pass filter (Step S5).

Next, a headroom torque $T_h$ of the hydraulic pump 12 is calculated by the motor demand determination unit 46 (Step S6). The headroom torque defines the minimum torque that the hydraulic pump 12 must be able to apply to the rotating shaft 8 at short notice to properly control the rotation speed during unexpected gusts or wind increases. The headroom torque $T_h$ is a function of the rotation speed of the hydraulic pump and its properties are described in detail later with reference to Fig. 7.

The torque of the rotating shaft 8 is the product of the selected net rate of displacement of the hydraulic pump 12 and the high oil pressure. Thus, the minimum $P_{min}$ of the oil pressure $P_s$ is calculated from the headroom torque $T_h$ and the maximum $D_{max}$ of the displacement settable for the hydraulic pump 12 (Step S7). The minimum $P_{min}$ defines the lower limit of the tolerance range of the oil pressure $P_s$ in the high pressure oil line 16.

The minimum $P_{min}$ of the oil pressure $P_s$ and the maximum $D_{max}$ as the upper limit of the tolerance range, and one of the target output of the hydraulic motor 14 and the smoothed target output of the hydraulic motor, are used to calculate the variable gain $K_p$ according to the function described with respect to Fig. 8 that is described later (Step S8).

Meanwhile, the target oil pressure $P_d$ in the high pressure oil line 16 is calculated (Step S9). The target oil pressure $P_d$ is a pressure which enables an optimum operation of the wind turbine generator 1 and is obtained according to the function described with respect to the Fig. 9 that is described later.

Next, the motor demand determination unit 46 calculates the nominal demand $D_n$ of displacement of the hydraulic motor 14 (Step S10). The nominal demand $D_n$ is calculated from the measured rotation speed Wm of the hydraulic motor 14 measured by the rotation speed meter 36, the measured oil pressure $P_s$ in the high pressure oil line measured by the pressure meter 31 and the target output POWER$_{motor}$ of the hydraulic motor 14. In this process, the nominal demand $D_n$ is calculated by dividing the target output POWER$_{motor}$ by the rotation speed $W_m$ and the oil pressure $P_s$ so as to obtain such nominal demand $D_n$ that makes the rotation speed of the generator constant.

The motor demand determination unit 46 obtains the demand correction $D_b$ of the hydraulic motor 14 (Step S11). The demand correction $D_b$ is calculated by multiplying the difference between the oil pressure $P_s$ and the target pressure $P_d$ by the variable gain $K_p$ obtained in the step S9.

Then, the displacement demand $D_m$ of the hydraulic motor 14 is calculated from the sum of the nominal demand $D_n$ and the demand correction Db (Step S 12).

The displacement demand $D_m$ of the hydraulic motor 14 may be corrected by the pump demand correction unit based on the oil temperature in the high pressure oil line 16 measured by the oil temperature 35. Thus, the hydraulic motor 14 can be properly controller with the consideration of thermal expansion of the working fluid.

The motor controller 48 adjusts the displacement of the hydraulic motor 14 to the displacement demand $D_m$ of the hydraulic motor determined as described above.

It is now explained how to adjust the displacement of the hydraulic motor 14 by the motor controller 48 in reference to Fig. 4.

In the hydraulic motor 14, the pressure difference created by the hydraulic pump 12 between the high pressure oil line 16 and the low pressure oil line 18, causes the pistons 92 to move periodically upward and downward to repeat a motor cycle of the pistons 92 starting from the top dead center and reaching the bottom dead center and a discharge cycle of the pistons starting from the bottom dead center and reaching the top dead center.

The motor controller 48 changes the number of disabled oil chambers so as to achieve the desired displacement $D_m$ of the hydraulic motor 14, the disabled oil chambers being kept such that during a cycle of the piston 92 of the hydraulic motor 14 starting from the bottom dead center, reaching the top dead center and returning to the bottom dead center, the high pressure valve 96 of the hydraulic motor 14 is closed and the low pressure valve 98 of the hydraulic motor 14 remains open. Specifically, the motor controller 48 sets the number of disabled chambers from the displacement $D_m$ of the hydraulic motor 14 according to a formula as described below. The hydraulic motor 14 is controlled according to the formula.

(Formula)

$$\text{Displacement } D_m = V_m \times F_{dm}$$

In the Formula 5, $V_m$ is total capacity of all of the cylinders 90 and $F_{dm}$ is a ratio of working chambers to all of the oil chambers 93. $F_{dm}$ may be determined over a period of time, such that $F_{dm}$ is a short-term average of ratios of working chambers to all of the oil chambers.

Herein, "disabled chamber" of the hydraulic motor 14 is an oil chamber 93 to which the operating oil is not supplied from the high pressure oil line 16 during the motor stroke of the piston 92 starting from the top dead center and reaching the bottom dead center, whereas "working chamber" of the hydraulic motor 14 is a oil chamber 93 to which the operating oil is supplied from the high pressure oil line 16 during the motor stroke of the piston 92 starting from the top dead center and reaching the bottom dead center.

The state of each oil chamber 93 (working chamber or disabled chamber) can be switched every cycle in which the piston 92 completes one set of upward and downward motions. Therefore, the displacements of the hydraulic motor 14 can be promptly changed by changing the ratio of disabled chambers to all of the oil chambers 93.

Alternatively, the motor controller 48 may adjust the displacement of the hydraulic motor 14 by changing the timing of opening the high pressure valve during the piston cycle.

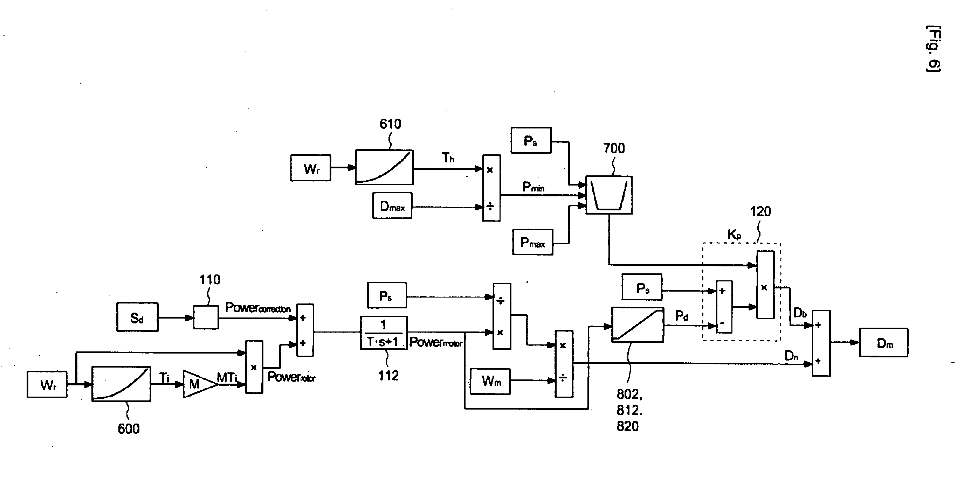

The signal flow of the control unit 40 is explained in reference to Fig. 6. FIG.6 corresponds to the flow chart of algorithm described in Fig. 5.

First, the ideal torque determination unit 41 determines the ideal torque $T_i$ from the measured rotation speed $W_r$ of the rotation shat 8 measured by the rotation speed meter 32. In the process, the function 600 of the target torque (the ideal torque $T_i$) and the rotation speed $W_r$ is used to determine the ideal torque $T_i$ at which the power coefficient Cp becomes maximum.

The target torque determination unit 42 determines the target torque $T_d$ of the hydraulic pump 12 based on the ideal torque $T_i$ obtained by the ideal torque determination unit 41. In the process, the ideal torque determination unit 42 calculates the adjusted ideal torque $MT_i$ by multiplying the ideal torque $T_i$ obtained by the ideal torque determination unit 41 by the scale factor M. The adjusted ideal torque $MT_i$ determined as described may be used as the target torque $T_d$. The scale factor M can be any number between zero and one, and preferably between 0.9 and 1. By multiplying the ideal torque $T_i$ by the scale factor M, the adjusted ideal torque $MT_i$ is slightly lower than the ideal torque $T_i$, thereby reducing the rotation speed by a corresponding amount. Therefore, the rotating shaft 8 accelerates more rapidly during gusts, thereby obtaining much power in comparison to the case of not using the scale factor M.

On the other hand, the scale factor M causes the rotating shaft 8 to decelerate more slowly, thus operating off its optimum rotation speed during lulls. However, the additional power available due to tracking gusts is more significant than power loss due to sub-optimal operation during lulls. By using the scale factor M to adjust the ideal torque $T_i$, it is possible to extract more wind power energy when the wind power energy increases, thereby improving the power generation.

The pump target output determination unit 43 determines the target output of the hydraulic pump 12, $POWER_{pump}$ by multiplying the rotation speed $W_r$ of the rotating shaft 8 measured by the rotation speed meter 32 by the adjusted ideal torque $MT_i$. The target output of the hydraulic pump, $POWER_{pump}$ may be determined based on hydraulic information such as a selected net rate of displacement of the hydraulic pump 12 and the oil pressure $P_s$ in the high pressure oil line.

The pump target output correction unit 44 calculates the output correction $POWER_{correction}$ by means of an adjuster 110 based on the power requirement instruction $S_d$ from the farm controller 200. Then, the pump target output correction unit corrects the target output $POWER_{pump}$ by adding the output correction $POWER_{correction}$ to the target output $POWER_{pump}$ of the hydraulic pump 12. The power requirement instruction $S_d$ is inputted from the wind farm to which the wind turbine generator belongs to the pump target output correction unit 44 in the manner described above. In this manner, the target torque $T_d$ is corrected based on the power requirement instruction $S_d$, thereby achieving the power output according to the demand.

The motor target output determination unit 45 calculates the target output $POWER_{motor}$ of the hydraulic motor 14 by smoothing the target output $POWER_{pump}$ of the hydraulic pump 12 by means of a smoothing module in the form of a first order low pass filter.

Next, The motor target output determination unit 45 calculates the nominal demand $D_n$ of the hydraulic motor 14 by dividing the target output $POWER_{motor}$ of the hydraulic motor 14 by the measured oil pressure Ps measured by the oil pressure sensor 31 and the measured rotation speed Wm of the hydraulic motor 14 measured by the rotation speed meter 36.

Meanwhile, the motor target output $POWER_{motor}$ calculated by the motor target output determination unit 45 is inputted to the motor demand correction unit 47. The motor demand correction unit 47 includes a pressure feedback controller 120 which calculates the demand correction $D_b$ of the hydraulic motor 14 by using the variable gain $K_p$. The oil pressure $P_s$ in the high pressure oil line, the variable gain $K_p$ and the target pressure $P_d$ obtained from the target output $POWER_{motor}$ according to the target pressure functions of Fig. 9 (802, 812, 820), are inputted to the pressure feedback controller 120 so as to obtain the demand correction $D_b$ of the hydraulic motor 14 for correcting the nominal demand $D_n$.

The variable gain $K_p$ is calculated based on where the current oil pressure Ps lies within the tolerance range, and within a first and second ranges of the tolerance range, according to a variable gain function 700 described in Fig. 8. The tolerance range is defined by the maximum Pmax and the minimum Pmin of the oil high oil pressure. In the process, the minimum Pmim is calculated by dividing the headroom torque $T_h$ by the maximum pump demand $D_{max}$ settable for the hydraulic pump 14. The headroom torque $T_h$ is described later in detail in reference to Fig. 7. The displacement demand $D_m$ of the hydraulic motor 14 is the sum of the nominal demand $D_n$ and the demand correction $D_b$.

The preferred embodiment is shown with a proportional controller for the pressure feedback controller 120 and a first order low pass filter for the smoothing module 112. It is also possible to make alternative embodiments. For example, the pressure feedback controller 120 may be a proportional-integral controller (PI controller) and the smoothing module 112 and the nominal demand $D_n$ may be removed altogether. In such case, a proportional-integral controller is selected from a set of candidate controllers in order to enhance the tracking of an output to an input. When the integral gain is low enough, the controller acts to smooth the wind power energy to create a smoothed motor demand correction $D_b$.

Fig. 7 shows the aerodynamically ideal torque (T, 598) as a function 600 of the rotation speed (Wr, 599) of the rotating shaft 8. The function 600 is used to determine the ideal torque $T_i$ by the ideal torque determination unit. The ideal torque $T_i$ is the torque at which the power coefficient Cp becomes maximum with respect to the rotation speed $W_r$ of the rotation shaft 8.

When the wind speed rises to a cut-in speed where the wind turbine generator 1 begins to operate, the blades are unfeathered and any mechanical brakes are released. When the rotation speed $W_r$ is below the minimum speed (601, section I in Fig. 7), the ideal torque is substantially zero and the generator accelerates up to the minimum speed without the pump applying any torque.

In section II, a preset increasing torque profile causes the controller unit to command the hydraulic pump to apply an increasing force to stabilize the speed of the generator. The optimum torque for the wind turbine generator with fixed blade pitch is a function of the wind or rotor speed squared. In the section III which corresponds to constant tip speed ratio range, the ideal torque curve follows this optimum profile to pitch the blades to their optimum aerodynamic pitch. In section IV, where the generator is near its maximum operating speed, the torque curve becomes a steep linear function up to the torque of the source at the maximum pressure (the rated torque). The purpose of section IV is to limit the speed of the generator, by ramping up the torque to its maximum value 603 over essentially a constant speed. By section V the torque inputted from the wind power energy has reached its maximum torque output, and the generator is at its maximum speed. In this region, the rotation speed of the generator is actively controlled by performing pitch control, and the pump is providing a constant (maximum) output torque.

The headroom torque curve 610 is shown in Fig. 7 as a dashed line. The headroom torque is shown as a quadratic function with, in section III, a constant offset from the optimum turbine torque, but may be another function which could even depend on other variables than the rotation speed $W_r$ of the rotating shaft 8. The headroom torque curve 610 may be adjusted during use according to changing wind conditions, for example expectations about the energy of gusts or lulls, based on experienced historical or current conditions.

Fig. 8 shows a typical pressure feedback controller gain $K_p$ 700 as a function of pressure P, 702. The minimum $P_{min}$ in the high pressure oil line of the tolerance range, varies as just described with the rotation speed of the rotating shaft 8. Fig. 8 shows a characteristic $K_p$ function at low speed 704 and a characteristic $K_p$ function at high speed 706. In this way the tolerance range (defined by the range $P_{min}$ to $P_{max}$) varies with the current rotation speed of the rotating shaft.

When the pressure of the hydraulic oil is below $P_{min}$ 708, 710, the variable gain $K_p$ is set at the maximum gain $K_{max}$. Above the maximum pressure in the high pressure manifold $P_{max}$ 714, the variable gain $K_p$ is set at the maximum gain Kmax. Thus when the pressure is outside the tolerance range, the motor net rate of displacement Dm is strongly controlled to bring the pressure within the tolerance range.

Over a first range 716 lying between $P_{min}$ and $P_{max}$ but not extending to either, the variable gain $K_p$ is constant at Kmin. In such case, the minimum Kmin of the variable gain $K_p$ is non-zero but low enough that the pressure is substantially unregulated. This has the benefit that when the high oil pressure is within the first range the pressure can vary widely to absorb energy into or extract energy from an accumulator, while still tending to converge on the target pressure. In other words, the net rate of displacement of working fluid by the hydraulic motor is selected independently of the high oil pressure.

The second range in which the variable gain $K_p$ changes, is between the first range 716 and the minimum, $P_{min}$ and the maximum, $P_{max}$. On a minimum side 720 and a maximum side 722 within the second range, the variable gain $K_p$ increases linearly from Kmin to Kmax. Thus the strength of pressure regulation increases progressively as the high oil pressure approaches the limits $P_{min}$ or $P_{max}$ of the tolerance range. This has the benefit of reducing the likelihood that the high oil pressure reaches either of those limits in use as the motor net rate of displacement Dm is more strongly controlled to maintain the high oil pressure within the tolerance range.

Fig. 9 shows examples of the types of target pressure functions that could be implemented by the invention. The target pressure functions define a target pressure for the pressure feedback controller 120 that is a function of the fluctuating energy flow or the low-pass filtered version 800.

The shape of the function is determined from a wide range of variables as will be explained.

The dot-dashed line 802 shows a first target pressure function wherein the target pressure is equal to or just larger than the constant minimum pressure Pacc,min 804 in a first region (I) spanning from zero power to a first power, is equal to the constant maximum pressure Pmax 808 in a fifth region (V) spanning from a fourth power 810 to the maximum rated power POWER$_{motor,max}$, and increases linearly with POWER$_{motor}$ between the first region and the fifth region.

The minimum precharge pressure Pacc,min is a lower limit to pressure below which there is insufficient compliance fluidically connected to the high pressure oil line, i.e. below the precharge pressure of the accumulators. The maximum pressure Pmax is related to the maximum allowable operating pressure of the pressurised hydraulic oil, considering component lifetimes and the setting of a relief valve. Thus the target pressure is responsive to characteristics of the fluctuating energy flow, the hydraulic pump and motor, and the accumulators.

The first target pressure function provides the benefit of ensuring that there is enough pressure for the pump to apply maximum torque to the rotor (including the rotating shaft 8) at high power conditions (i.e. in the fifth region V). The first target pressure function further provides the benefit of ensuring that in the first region (I) in which the kinetic energy in the rotor is low, the pressure is maintained low enough that the relative energy absorbed by individual working chamber activations of the pump is not sufficient to apply too much torque to the blades or other parts of the wind turbine generator, while still being above the minimum allowable pressure $P_{min}$.

A second target pressure function 812 is shown with a solid line. This function is similar to the first target pressure function in regions I and V, but further includes a third region (III) spanning from a second power 814 to a third power 816 in which the target pressure is an optimum pressure Popt 818, and second (II) and fourth regions (IV) spanning from the first to the second powers and from the third to the fourth powers respectively, which provide for a smooth change in target pressure between the adjacent regions. Optimum pressure Popt is a pressure at which the hydraulic pump and the hydraulic motor (and all the other hydraulic components) together work at optimal hydraulic efficiency. Popt may be found by experiment, simulation or calculation, or any combination thereof. It may be that at least one of the pump and the motor is designed to be optimally efficient at Popt, which may be chosen by the designer. Thus the target pressure is responsive to characteristics of the fluctuating energy flow, the hydraulic pump and the hydraulic motor. The second target pressure function provides the benefit of ensuring that the transmission operates where possible at an optimal pressure and thus that its energy productivity is maximized.

A third target pressure function 820 is shown with a dashed line in Fig. 9. This function defines a target pressure that is closer to the minimum system pressure, rather than the maximum, over the majority of the operating power throughput levels of the wind turbine generator. The advantage of the third target pressure function is that the accumulators are generally at a low state of charge to maximize the storage available to accept energy from gusts of wind, and also to operate the wind turbine generator at high rates of fluid flow, rather than high pressure, which may be desirable to reduce vibration and or noise, or to increase the lifetime of the wind turbine generator.

The particular target pressure function that is implemented may change on a second-by-second basis with respect to other parameters, for example, throughput power estimates from an external source, the estimated lifetime and efficiency of components of the wind turbine generator, the need to start or stop the wind turbine generator or any other desired operating mode of the wind turbine generator. For example, when the wind speed is not fluctuating much the control unit selects the second target pressure function 812 so that the pressure is typically optimized for hydraulic efficiency, whereas when the wind is gusty the control unit selects the third target pressure function 820 so that the accumulators can absorb the energy of the gusts. Thus the target pressure is changed (reduced) in anticipation of energy being received from the fluctuating energy source at a rate which would cause the pressure in the high pressure oil line to exceed a threshold (entering the upper second range 720. In another example, the control unit may select the third target pressure function (820) over the second target pressure function (812) responsive to detection of a small leak, because the third target pressure function maintains a lower pressure which will make the leak less severe, and is also less likely to lead to a major failure. The control unit may of course blend any of the target pressure functions together to create an infinite number of variations, optimized for any conditions and location.

As described above, in the preferred embodiment, the motor target output determination unit 45 determines the target output of the hydraulic motor 14, POWER$_{motor}$ based on the target output of the hydraulic pump 12, POWER$_{pump}$, based on which the motor control is performed. Therefore, it is possible to achieve the desired output of the hydraulic pump 12.

The motor demand determination unit 46 determines the displacement demand D$_m$ of the hydraulic motor 14 based on the target output of the hydraulic motor 14, POWER$_{motor}$ so that the rotation speed of the generator 20 is constant and the motor controller 48 adjusts the displacement of the hydraulic motor 14 to the determined displacement demand D$_m$. Therefore, it is possible to maintain the rotation speed of the generator 20 the same even if the target output of the hydraulic pump 14 is changed. As a result, it is possible to produce electric power having a constant frequency by the generator 20.

The target torque determination unit 42 determines the target torque T$_p$ of the hydraulic pump 12 based on the ideal torque of the rotating shaft 8 at which the power coefficient becomes maximum and the pump target output determination unit 45 determines the target output of the hydraulic pump, POWER$_{pump}$ based on the target torque. Therefore, it is possible to maintain the power generation efficiency of the wind turbine generator 1.

In the ideal torque determination unit 41, the ideal torque is obtained based on the measured rotation speed of the rotating shaft 8 measured by the rotation speed meter 32, thereby achieving power generation efficiency of the wind turbine generator. The rotation speed meter 32 can measure the rotation speed of the rotating shaft 8 with high accuracy, and thus, the hydraulic motor 14 can be controlled appropriately by determining the ideal torque based on the measured rotation speed of the rotating shaft 8. It is possible to use the average of the measured rotation speeds of the rotating shaft 8 measured by a plurality of the rotation speed meters 32. In such case, it is possible to improve the accuracy of determining the ideal torque and also to remove the noise due to the rotation speed meters 32 themselves, external factors or the like.

The pump target output correction unit 44 corrects the target output of the hydraulic pump 12, POWER$_{pump}$ based on the power requirement instruction S$_d$ from the farm controller 200. As a result, the power generation can be performed appropriately in accordance with the actual power required by the wind turbine generator 1.

The target output of the hydraulic motor 14, POWER$_{motor}$ is obtained by smoothing the target output of the hydraulic pump 12, POWER$_{pump}$. As a result, even when the output of the hydraulic pump 12 changes drastically, the target output of the hydraulic motor 14 can be changed smoothly, thereby achieving a stable operation of the generator 20.

The motor demand determination unit 46 determines the nominal demand D$_n$ of the hydraulic motor 14 by dividing the target output of the hydraulic motor 14, POWER$_{motor}$ by the high oil pressure P$_s$, thereby obtain-

ing the nominal motor demand $D_n$ that maintains the rotation speed of the generator 20 constant.

In the process, the motor demand determination unit 46 obtains the demand correction $D_b$ of the hydraulic motor 14 for adjusting the high oil pressure $P_s$, and the obtained demand correction $D_b$ is added to the nominal motor demand $D_n$ to determine the displacement demand $D_m$ of the hydraulic motor 14. As a result, the high oil pressure $P_s$ is adjusted closer to the target pressure $P_d$ positively.

When obtaining the demand correction $D_b$ of the hydraulic motor 14, the high oil pressure $P_s$ can be closer to the target torque $P_d$ by setting appropriately the variable gain $K_p$ that is variable in accordance with the oil pressure $P_s$.

In such process, the high oil pressure $P_s$ can be held within the tolerance range by obtaining the variable gain $K_p$ according to the variable gain function as described in Fig. 8. Further, the demand correction $D_b$ of the hydraulic motor 14 can be appropriately determined depending on whether or not the demand displacement $D_m$ of the hydraulic motor 14 should be corrected.

The minimum $P_{min}$ of the tolerance range may be determined based on the rotation speed of the rotating shaft 8 and a maximum displacement $D_{max}$ that is settable for the hydraulic pump 12, thereby appropriately setting the minimum $P_{min}$ of the tolerance range that is an important factor for the motor control.

While the present invention has been described with reference to exemplary embodiments, it is obvious to those skilled in the art that various changes may be made without departing from the scope of the invention.

For instance, the above preferred embodiment uses the exemplary case in which the present invention is applied to the wind turbine generator. But the present invention is also applicable to a tidal current generator. A "tidal current generator" herein refers to a generator which is installed in places such as sea, a river and a lake and utilizes tidal energy. The tidal current generator has the same basic structure as the wind turbine generator 1 except that the rotor 2 is rotated by the tidal current instead of the wind. The tidal current generator includes the rotor 2 rotated by the tidal current, the hydraulic transmission 10 for increasing the rotation speed of the rotor 2, the generator 20 for generating electric power and the control unit 40 for controlling each unit of the tidal current generator.

Herein, the control unit 40 of the tidal current generator calculates the target output POWER$_{motor}$ of the hydraulic motor 14 based on the target output POWER$_{pump}$ of the hydraulic pump 12, determines the displacement demand $D_m$ of the hydraulic motor 14 based on the target output POWER$_{motor}$, and adjusts the displacement of the hydraulic motor 14 to the displacement demand $D_m$. Therefore, it is possible to achieve the desired output of the hydraulic motor, thereby improving power generation efficiency.

In the preferred embodiment, explained is the exemplary case where the ideal torque $T_i$ at which the power coefficient becomes maximum is obtained based on the rotation speed $W_r$ of the rotating shaft 8 measured by the rotation speed meter 32. However, this is not limitative and it is also possible to obtain the ideal torque $T_i$ as described below as an alternative method.

As a first alternative method, the ideal torque $T_i$ may be obtained based on the wind speed estimated from the rotation speed of the rotating shaft 8 measured by the rotation speed meter 32. In such case, the Cp maximum curves as shown in Fig. 10 and Fig. 11 are used. The Cp maximum curves are stored in the memory unit 49 of the control unit 40. Fig. 10 shows a Cp maximum curve 900 with the wind speed V on the horizontal axis and the rotation speed $W_r$ of the rotating shaft 8 on the vertical axis. Fig. 11 shows a Cp maximum curve 902 with the rotation speed $W_r$ of the rotating shaft 8 on the horizontal axis and the target torque of the hydraulic pump 12 on the vertical axis.

Under the condition that the operation state in which the power coefficient Cp is kept maximum, the wind speed V corresponding to the measured rotation speed $W_r$ is obtained based on the Cp maximum curve 900 shown in Fig. 10. And the ideal torque $T_i$ of the hydraulic pump 12 corresponding to the wind speed V estimated as described above, is obtained according to the Cp maximum curve 902 shown in Fig. 11. Fig. 11 illustrates an exemplary case of determining the ideal torque $T_i$ of the hydraulic pump 12 when the estimated wind speed V is $V_2$.

In this manner, the ideal torque $T_i$ is obtained based on the wind speed estimated from the rotation speed of the rotating shaft 8 measured by the rotation speed meter 32, thereby improving power generation efficiency of the wind turbine generator 1. As the wind speed is estimated from the measured rotation speed, the wind speed can be estimated with high accuracy, thereby controlling the hydraulic motor properly. It is possible to use an average of the measured rotation speeds of the rotating shaft 8 measured by more than one rotation speed meter 32. In such case, the accuracy of calculating the ideal torque is improved, and the noise due to the rotation speed meters themselves, external factors or the like can be removed.

As a second alternative method, the ideal torque $T_i$ may be obtained based on the wind speed measured by an anemometer 33.

The anemometer 33 measures the wind speed, based on which the ideal torque is obtained, thereby improving power generation efficiency of the wind turbine generator 1. As the wind speed is directly measured by the anemometer 33, it is easy to calculate the ideal torque. It is possible to use an average of the measured wind speeds measured by more than one anemometer 33. In such case, the accuracy of calculating the ideal torque is improved, and the noise due to the anemometers themselves, external factors or the like can be removed.

Reference Signs List

| 1 | Wind turbine generator |
|---|---|
| 2 | Rotor |
| 4 | Blade |
| 6 | Hub |
| 8 | Rotating shaft |
| 10 | Hydraulic transmission |
| 12 | Hydraulic pump |
| 14 | Hydraulic motor |
| 16 | High pressure oil line |
| 18 | Low pressure oil line |
| 20 | Generator |
| 22 | Nacelle |
| 24 | Tower |
| 26 | Base |
| 31 | Pressure meter |
| 32 | Rotation speed meter |
| 33 | Anemometer |
| 34 | Ambient temperature sensor |
| 35 | Oil temperature sensor |
| 36 | Rotation speed meter |
| 40 | Control unit |
| 41 | Ideal torque determination unit |
| 42 | Target torque determination unit |
| 43 | Target torque correction unit |
| 44 | Pump demand determination unit |
| 45 | Pump demand correction unit |
| 46 | Pump controller |
| 47 | Memory unit |
| 50 | Grid |
| 52 | exciter |
| 54 | grid state judging unit |
| 60 | bypass line |
| 62 | relief valve |
| 64 | anti-pulsation accumulator |
| 66 | oil filter |
| 68 | oil cooler |
| 70 | oil tank |
| 72 | supplementary line |
| 74 | boost pump |
| 76 | oil filter |
| 78 | return line |
| 79 | low pressure relief valve |
| 110 | Adjuster |
| 112 | Smoothing module |
| 120 | Pressure feedback controller |
| 600 | Cp maximum curve |
| 610 | Headroom torque curve |
| 802, 812, 820 | Target pressure function |

**Claims**

**1.** A power generating apparatus of renewable energy type which generates power from a renewable energy source, comprising:

    a rotating shaft (8) driven by the renewable energy source;
    a hydraulic pump (12) driven by the rotating shaft (8);
    a hydraulic motor (14) driven by pressurized oil supplied from the hydraulic pump (12);
    a generator (20) coupled to the hydraulic motor;
    a high pressure oil line (16) through which a discharge side of the hydraulic pump (12) is in fluid communication with an intake side of the hydraulic motor (14);
    a low pressure oil line (18) through which an intake side of the hydraulic pump (12) is in fluid communication with a discharge side of the hydraulic motor (14);
    a motor target output determination unit (45) which determines a target output of the hydraulic motor, $POWER_{motor}$, based on a target output of the hydraulic pump, $POWER_{pump}$;
    a motor demand determination unit (46) which determines a displacement demand $D_m$ of the hydraulic motor (14); and
    a motor controller (48) which adjusts displacement of the hydraulic motor (14) to the determined displacement demand $D_m$,
    **characterised in that**
    the motor demand determination unit (46) obtains:

        a nominal motor demand $D_n$ of the hydraulic motor by dividing the target output of the hydraulic motor, $POWER_{motor}$ by a rotational speed of the hydraulic motor and an oil pressure $P_s$ in the high pressure oil line,
        a target oil pressure $P_d$ in the high pressure oil line based on the target output $POWER_{motor}$, and
        a demand correction $D_b$ determined from a difference between the oil pressure Ps in the high pressure oil line and the target oil pressure $P_d$, and

    the motor demand determination unit (46) determines the displacement demand $D_m$ of the hydraulic motor from a sum of the nominal motor demand $D_n$ and the demand correction $D_b$.

**2.** The power generating apparatus of renewable energy type according to claim 1, further comprising:

    a target torque determination unit (42) which determines a target torque of the hydraulic pump, $T_p$ based on an ideal torque of the rotating shaft (8) at which a power coefficient becomes maximum; and
    a pump target output determination unit which determines the target output of the hydraulic pump, $POWER_{pump}$ based on the target torque of the hydraulic pump, $T_p$ determined by the target torque determination unit (42).

**3.** The power generating apparatus of renewable energy type according to claim 2, further comprising; a rotation speed meter (32) which measures a rotation speed of the rotating shaft (8); and an ideal torque determination unit (41) which determines the ideal torque of the rotating shaft in accordance with the measured rotation speed of the rotating shaft.

**4.** The power generating apparatus of renewable energy type according to claim 3, wherein a plurality of the rotation speed meters (32) are provided, and wherein the ideal torque determination unit (41) determines the ideal torque of the rotating shaft (8) in accordance with an average of the rotation speeds of the rotating shaft measured by the rotation speed meters.

**5.** The power generating apparatus of renewable energy type according to claim 2, further comprising:

a rotation speed meter (32) which measures a rotation speed of the rotating shaft (8); and an ideal torque determination unit (41) which determines the ideal torque of the rotating shaft (8) in accordance with an estimated speed of energy flow of the renewable energy source estimated from the measured rotation speed of the rotating shaft (8).

**6.** The power generating apparatus of renewable energy type according to claim 5, wherein a plurality of the rotation speed meters (32) are provided, and wherein the estimated flow speed of the energy flow is estimated from an average of the rotation speeds of the rotating shaft (8) measured by the rotation speed meters (32).

**7.** The power generating apparatus of renewable energy type according to claim 2, further comprising:

a speed meter (33) which measures a speed of energy flow of the renewable energy source; and an ideal torque determination unit (41) which determines the ideal torque of the rotating shaft (8) in accordance with the measured speed of the energy flow.

**8.** The power generating apparatus of renewable energy type according to claim 7, wherein a plurality of the speed meters (33) are provided, and wherein the ideal torque determination unit (41) determines the ideal torque of the rotating shaft (8) in accordance with an average of the speeds of the energy flow measured by the speed meters (33).

**9.** The power generating apparatus of renewable energy type according to claim 2, further comprising: a pump target output correction unit (44) which corrects the target output of the hydraulic pump, $POWER_{pump}$ based on a power requirement instruction from a farm controller (200) of a power generation farm to which the power generating apparatus of renewable energy type belongs.

**10.** The power generating apparatus of renewable energy type according to claim 1, wherein the motor target output determination unit (45) comprises a low-pass filter which smoothes the target output of the hydraulic pump, $POWER_{pump}$ to obtain the target output of the hydraulic motor, $POWER_{motor}$.

**11.** The power generating apparatus of renewable energy type according to claim 1, wherein the motor demand determination unit (46) obtains the demand correction $D_b$ by multiplying a difference between the oil pressure $P_s$ and the target oil pressure $P_d$ by a variable gain $K_p$ that is variable in accordance with the oil pressure $P_s$.

**12.** The power generating apparatus of renewable energy type according to claim 11, wherein the variable gain $K_p$ is set so that: when the oil pressure $P_s$ is not higher than a minimum $P_{min}$ of a tolerance range of the oil pressure in the high pressure oil line (16) or not lower than a maximum $P_{max}$ of the tolerance range, the variable gain $K_p$ is a maximum value $K_{max}$; and when the oil pressure $P_s$ is between the minimum $P_{min}$ and the maximum $P_{max}$ of the tolerance range of the oil pressure in the high pressure oil line (16), the closer to the minimum $P_{min}$ or the maximum $P_{max}$ the oil pressure $P_s$ becomes, the more the variable gain $K_p$ increases.

**13.** The power generating apparatus of renewable energy type according to claim 12, wherein the minimum $P_{min}$ of the tolerance range is determined based on a rotation speed of the rotating shaft (8) and a maximum displacement $D_{max}$ that is settable for the hydraulic pump (12).

**14.** The power generating apparatus of renewable energy type according to claim 2, further comprising:

an ambient temperature sensor (34) which measures ambient temperature of the power generating apparatus, wherein the ideal torque of the rotating shaft (8) is corrected based on the measured ambient temperature.

**15.** The power generating apparatus of renewable energy type according to claim 1, further comprising:

an oil temperature sensor (35) which measures an oil temperature in the high pressure oil line; and
a motor demand correction unit (47) which corrects the displacement demand $D_m$ of the hydraulic motor based on the measured oil temperature in the high pressure oil line (16).

**16.** The power generating apparatus of renewable energy type according to claim 1, wherein the power generating apparatus is a wind turbine generator which generates power from wind as the renewable energy source.

**17.** A method of operating a power generating apparatus of renewable energy type which comprises: a rotating shaft (8) driven by the renewable energy source; a hydraulic pump (12) driven by the rotating shaft (8); a hydraulic motor (14) which is driven by pressurized oil supplied from the hydraulic pump (12); a generator (20) coupled to the hydraulic motor (14); a high pressure oil line (16) through which a discharge side of the hydraulic pump (12) is in fluid communication with an intake side of the hydraulic motor (14); and a low pressure oil line (18) through which an intake side of the hydraulic pump (12) is in fluid communication with a discharge side of the hydraulic motor (14), the method comprising the steps of:

determining a target output of the hydraulic motor, $POWER_{motor}$ based on a target output of the hydraulic pump, $POWER_{pump}$;
determining a displacement demand $D_m$ of the hydraulic motor (14); and
adjusting displacement of the hydraulic motor (14) to the determined displacement demand $D_m$,
**characterised in that**
the step of determining the demand $D_m$ includes obtaining:

a nominal motor demand $D_n$ of the hydraulic motor (14) by dividing the target output of the hydraulic motor, $POWER_{motor}$ by a rotational speed of the hydraulic motor (14) and an oil pressure $P_s$ in the high pressure oil like (16),
a target oil pressure $P_d$ in the high pressure oil line (16) based on the target output $POWER_{motor}$, and
a demand correction $D_b$ determined from a difference between the oil pressure $P_s$ in

the high pressure oil line (16) and the target oil pressure $P_d$, and

the method further comprises determining the displacement demand $D_m$ of the hydraulic motor (14) from a sum of the nominal motor demand $D_n$ and the demand correction $D_b$.

**Patentansprüche**

**1.** Vorrichtung zur Stromerzeugung aus erneuerbarer Energie, die Strom aus einer erneuerbaren Energiequelle erzeugt und die umfasst:

eine Drehwelle (8), die von der erneuerbaren Energiequelle angetrieben wird;
eine Hydraulikpumpe (12), die von der Drehwelle (8) angetrieben wird;
einen Hydraulikmotor (14), der von einem unter Druck stehendem Öl angetrieben wird, das von der Hydraulikpumpe (12) zugeführt wird;
einen Generator (20), der mit dem Hydraulikmotor verbunden ist;
eine Hochdruckölleitung (16), durch die eine Abgabeseite der Hydraulikpumpe (12) in einer Fluidkommunikation mit einer Zulaufseite des Hydraulikmotors (14) steht;
eine Niederdruckölleitung (18), durch die eine Saugseite der Hydraulikpumpe (12) in einer Fluidkommunikation mit einer Abgabeseite des Hydraulikmotors (14) steht;
eine Einheit (45) zur Bestimmung einer Zielabgabe des Motors, die eine Zielabgabe des Hydraulikmotors, $POWER_{motor}$ auf der Grundlage einer Zielabgabe der Hydraulikpumpe, $POWER_{pump}$, bestimmt;
eine Einheit (46) zur Bestimmung einer Motoranforderung, die eine Verdrängungsanforderung $D_m$ des Hydraulikmotors (14) bestimmt; und
eine Motorsteuereinheit (48), die die Verdrängung des Hydraulikmotors (14) an die bestimmte Verdrängungsanforderung $D_m$ anpasst;
**dadurch gekennzeichnet, dass**
die Einheit (46) zur Bestimmung einer Motoranforderung Folgendes erhält:

eine Nennmotoranforderung $D_n$ des Hydraulikmotors durch Dividieren der Zielabgabe des Hydraulikmotors, $POWER_{motor}$, durch eine Drehzahl des Hydraulikmotors und durch einen Öldruck $P_S$ in der Hochdruckölleitung,
einen Zielöldruck $P_d$ in der Hochdruckölleitung auf der Grundlage der Zielabgabe $POWER_{motor}$, und
eine Anforderungskorrektur $D_b$, die aus einer Differenz zwischen dem Öldruck $P_S$ in der Hochdruckölleitung und dem Zielöldruck $P_d$ bestimmt wird, und

wobei die Einheit (46) zur Bestimmung einer Motoranforderung die Verdrängungsanforderung $D_m$ des Hydraulikmotors aus einer Summe der Nennmotoranforderung $D_n$ und der Anforderungskorrektur $D_b$ bestimmt.

2. Vorrichtung zur Stromerzeugung aus erneuerbarer Energie nach Anspruch 1, die ferner umfasst:

eine Einheit (42) zur Bestimmung eines Zieldrehmoments, die ein Zieldrehmoment der Hydraulikpumpe $T_p$ auf der Grundlage eines idealen Drehmoments der Drehwelle (8), bei dem ein Leistungskoeffizient ein Maximum wird, bestimmt; und

eine Einheit zur Bestimmung einer Zielabgabe der Pumpe, die die Zielabgabe der Hydraulikpumpe $POWER_{pump}$ auf der Grundlage des Zieldrehmoments der Hydraulikpumpe $T_p$, das von der Einheit (42) zur Bestimmungs des Zieldrehmoments bestimmt wird, bestimmt.

3. Vorrichtung zur Stromerzeugung aus erneuerbarer Energie nach Anspruch 2, die ferner umfasst:

einen Drehzahlmesser (32), der eine Drehzahl der Drehwelle (8) misst; und
eine Einheit (41) zur Bestimmung eines idealen Drehmoments, die das ideale Drehmoment der Drehwelle gemäß der gemessenen Drehzahl der Drehwelle bestimmt.

4. Vorrichtung zur Stromerzeugung aus erneuerbarer Energie nach Anspruch 3,
wobei mehrere der Drehzahlmesser (32) bereitgestellt sind, und
wobei die Einheit (41) zur Bestimmung eines idealen Drehmoments das ideale Drehmoment der Drehwelle (8) gemäß einem Durchschnitt der Drehzahlen der Drehwelle bestimmt, die durch die Drehzahlmesser gemessen werden.

5. Vorrichtung zur Stromerzeugung aus erneuerbarer Energie nach Anspruch 2, die ferner umfasst:

einen Drehzahlmesser (32), der die Drehzahl der Drehwelle (8) misst; und
eine Einheit (41) zur Bestimmung eines idealen Drehmoments, die das ideale Drehmoment der Drehwelle (8) gemäß einer geschätzten Geschwindigkeit eines Energieflusses der erneuerbaren Energiequelle, die aus der gemessenen Drehzahl der Drehwelle (8) geschätzt wird, bestimmt.

6. Vorrichtung zur Stromerzeugung aus erneuerbarer Energie nach Anspruch 5,
wobei mehrere der Drehzahlmesser (32) bereitgestellt sind, und
wobei die geschätzte Geschwindigkeit des Energieflusses aus einem Durchschnitt der Drehzahlen der Drehwelle (8), die durch die Drehzahlmesser (32) gemessen werden, geschätzt wird.

7. Vorrichtung zur Stromerzeugung aus erneuerbarer Energie nach Anspruch 2, die ferner umfasst:

einen Geschwindigkeitsmesser (33), der eine Geschwindigkeit des Energieflusses der erneuerbaren Energiequelle misst; und
eine Einheit (41) zur Bestimmung eines idealen Drehmoments, die das ideale Drehmoment der Drehwelle (8) gemäß der gemessenen Geschwindigkeit des Energieflusses bestimmt.

8. Vorrichtung zur Stromerzeugung aus erneuerbarer Energie nach Anspruch 7,
wobei mehrere der Geschwindigkeitsmesser (33) bereitgestellt sind, und
wobei die Einheit (41) zur Bestimmung eines idealen Drehmoments das ideale Drehmoment der Drehwelle (8) gemäß einem Durchschnitt der Geschwindigkeiten des Energieflusses bestimmt, die durch die Geschwindigkeitsmesser (33) gemessen werden.

9. Vorrichtung zur Stromerzeugung aus erneuerbarer Energie nach Anspruch 2, die ferner umfasst: eine Einheit (44) zur Korrektur einer Zielabgabe einer Pumpe, die die Zielabgabe der Hydraulikpumpe $POWER_{pump}$ auf der Grundlage einer Leistungsanforderungsanweisung von einer Farmsteuereinheit (200) einer Stromerzeugungsfarm, zu der die Vorrichtung zur Stromerzeugung aus erneuerbarer Energie gehört, korrigiert.

10. Vorrichtung zur Stromerzeugung aus erneuerbarer Energie nach Anspruch 1, wobei die Einheit (45) zur Bestimmung einer Zielabgabe des Motors einen Tiefpassfilter umfasst, der die Zielabgabe der Hydraulikpumpe $POWER_{pump}$ glättet, um die Zielabgabe des Hydraulikmotors $POWER_{motor}$ zu erhalten.

11. Vorrichtung zur Stromerzeugung aus erneuerbarer Energie nach Anspruch 1, wobei die Einheit (46) zur Bestimmung einer Motoranforderung die Anforderungskorrektur $D_b$ durch ein Multiplizieren der Differenz zwischen dem Öldruck $P_S$ und dem Zielöldruck $P_d$ mit einer variablen Verstärkung $K_p$ erhält, die gemäß dem Öldruck $P_S$ variabel ist.

12. Vorrichtung zur Stromerzeugung aus erneuerbarer Energie nach Anspruch 11, wobei die variable Verstärkung $K_p$ derart festgesetzt ist, dass: dann, wenn der Öldruck $P_S$ nicht höher als ein Minimum $P_{min}$ eines Toleranzbereichs des Öldrucks in der Hochdruckölleitung (16) oder nicht niedriger als ein Maximum $P_{max}$ des Toleranzbereichs ist, die variable Verstärkung $K_p$ ein maximaler Wert $K_{max}$ ist; und wenn der Öldruck $P_S$ zwischen dem Minimum $P_{min}$ und dem Maximum $P_{max}$ des Toleranzbereichs des Öldrucks in der Hochdruckölleitung (16) liegt, dann steigt die variable Verstärkung $K_p$ desto mehr an, je näher sich der Öldruck $P_S$ dem Minimum $P_{min}$ oder dem Maximum $P_{max}$ nähert.

13. Vorrichtung zur Stromerzeugung aus erneuerbarer Energie nach Anspruch 12, wobei das Minimum $P_{min}$ des Toleranzbereichs auf der Grundlage einer Drehzahl der Drehwelle (8) und einer maximalen Verdrängung $D_{max}$, die für die Hydraulikpumpe (12) festlegbar ist, bestimmt wird.

14. Vorrichtung zur Stromerzeugung aus erneuerbarer Energie nach Anspruch 2, die ferner umfasst:

einen Umgebungstemperatursensor (34), der die Umgebungstemperatur der Vorrichtung zur Stromerzeugung misst, wobei das ideale Drehmoment der Drehwelle (8) auf der Grundlage der gemessenen Umgebungstemperatur korrigiert wird.

15. Vorrichtung zur Stromerzeugung aus erneuerbarer Energie nach Anspruch 1, die ferner umfasst:

einen Öltemperatursensor (35), der eine Öltemperatur in der Hochdruckölleitung misst; und eine Einheit (47) zur Korrektur einer Motoranforderung, die die Verdrängungsanforderung $D_m$ des Hydraulikmotors auf der Grundlage der gemessenen Öltemperatur in der Hochdruckölleitung (16) korrigiert.

16. Vorrichtung zur Stromerzeugung aus erneuerbarer Energie nach Anspruch 1, wobei die Vorrichtung zur Stromerzeugung ein Windturbinengenerator ist, der Energie aus der erneuerbaren Energiequelle Wind erzeugt.

17. Verfahren zum Betreiben einer Vorrichtung zur Stromerzeugung aus erneuerbarer Energie, die umfasst: eine Drehwelle (8), die von der erneuerbaren Energiequelle angetrieben wird; eine Hydraulikpumpe (12), die von der Drehwelle (8) angetrieben wird; einen Hydraulikmotor (14), der von einem unter Druck stehendem Öl angetrieben wird, das von der Hydraulikpumpe (12) zugeführt wird; einen Generator (20), der mit dem Hydraulikmotor (14) verbunden ist; eine Hochdruckölleitung (16), durch die eine Abgabeseite der Hydraulikpumpe (12) in einer Fluidkommunikation mit einer Zulaufseite des Hydraulikmotors (14) steht; und eine Niederdruckölleitung (18), durch die eine Saugseite der Hydraulikpumpe (12) in einer Fluidkommunikation mit einer Abgabeseite des Hydraulikmotors (14) steht, wobei das Verfahren die folgenden Schritte umfasst:

Bestimmen einer Zielabgabe des Hydraulikmotors $POWER_{motor}$ auf der Grundlage einer Zielabgabe der Hydraulikpumpe $POWER_{pump}$; Bestimmen einer Verdrängungsanforderung $D_m$ des Hydraulikmotors (14); und Anpassen einer Verdrängung des Hydraulikmotors (14) an die bestimmte Verdrängungsanforderung $D_m$, **dadurch gekennzeichnet, dass** der Schritt zum Bestimmen der Anforderung $D_m$ ein Erhalten von dem Folgenden enthält:

eine Nennmotoranforderung $D_n$ des Hydraulikmotors (14) durch Dividieren der Zielabgabe des Hydraulikmotors, $POWER_{motor}$, durch eine Drehzahl des Hydraulikmotors (14) und durch einen Öldruck $P_S$ in der Hochdruckölleitung (16), einen Zielöldruck $P_d$ in der Hochdruckölleitung (16) auf der Grundlage der Zielabgabe $POWER_{motor}$, und eine Anforderungskorrektur $D_b$, die aus einer Differenz zwischen dem Öldruck $P_S$ in der Hochdruckölleitung (16) und dem Zielöldruck $P_d$ bestimmt wird, und wobei das Verfahren ferner ein Bestimmen der Verdrängungsanforderung $D_m$ des Hydraulikmotors (14) aus einer Summe der Nennmotoranforderung $D_n$ und der Anforderungskorrektur $D_b$ umfasst.

**Revendications**

1. Appareil de production d'énergie du type énergie renouvelable qui produit de l'énergie à partir d'une source d'énergie renouvelable, comprenant :

un arbre tournant (8) entraîné par la source d'énergie renouvelable ; une pompe hydraulique (12) entraînée par l'arbre tournant (8) ; un moteur hydraulique (14) entraîné par de l'huile pressurisée alimentée depuis la pompe hydraulique (12) ; une génératrice (20) raccordée au moteur hydraulique ; une canalisation d'huile sous haute pression (16) à travers laquelle un côté refoulement de la pompe hydraulique (12) est en communication fluidique avec un côté admission du moteur hydraulique (14) ; une canalisation d'huile sous basse pression (18) à travers laquelle un côté admission de la pompe hydraulique (12) est en communication fluidique avec un côté refoulement du moteur hydraulique (14) ;

une unité de détermination de sortie du moteur (45) qui détermine une sortie cible du moteur hydraulique, $POWER_{motor}$, en se basant sur une sortie cible de la pompe hydraulique, $POWER_{pump}$;

une unité de détermination de demande du moteur (46) qui détermine une demande de déplacement $D_m$ du moteur hydraulique (14) ; et

un dispositif de commande du moteur (48) qui règle le déplacement du moteur hydraulique (14) sur la demande de déplacement déterminée $D_m$,

**caractérisé en ce que**

l'unité de détermination de la demande du moteur (46) obtient :

une demande nominale du moteur $D_n$ du moteur hydraulique en divisant la sortie cible du moteur hydraulique, $POWER_{motor}$, par une vitesse de rotation du moteur hydraulique et une pression d'huile $P_s$ dans la canalisation d'huile sous haute pression,

une pression d'huile cible $P_d$ dans la canalisation d'huile sous haute pression en se basant sur la sortie cible, $POWER_{motor}$, et

une correction de la demande $D_b$ déterminée à partir d'une différence entre la pression d'huile $P_s$ dans la canalisation d'huile sous haute pression et la pression d'huile cible $P_d$, et

l'unité de détermination de la demande du moteur (46) détermine la demande de déplacement $D_m$ du moteur hydraulique à partir d'une somme de la demande nominale du moteur $D_n$ et de la correction de la demande $D_b$.

2. Appareil de production d'énergie du type énergie renouvelable selon la revendication 1, comprenant en outre :

une unité de détermination du couple cible (42) qui détermine un couple cible de la pompe hydraulique, $T_p$, en se basant sur un couple idéal de l'arbre tournant (8) auquel un coefficient de puissance devient maximum ; et

une unité de détermination de la sortie cible de la pompe qui détermine la sortie cible de la pompe hydraulique, $POWER_{pump}$, en se basant sur le couple cible de la pompe hydraulique, $T_p$, déterminé par l'unité de détermination du couple cible (42).

3. Appareil de production d'énergie du type énergie renouvelable selon la revendication 2, comprenant en outre :

un appareil de mesure de vitesse de rotation (32) qui mesure une vitesse de rotation de l'arbre tournant (8) ; et

une unité de détermination du couple idéal (41) qui détermine le couple idéal de l'arbre tournant en fonction de la vitesse de rotation mesurée de l'arbre tournant.

4. Appareil de production d'énergie du type énergie renouvelable selon la revendication 3,

dans lequel une pluralité d'appareils de mesure de vitesse de rotation (32) sont prévus, et

dans lequel l'unité de détermination du couple idéal (41) détermine le couple idéal de l'arbre tournant (8) en fonction d'une moyenne des vitesses de rotation de l'arbre tournant mesurées par les appareils de mesure de vitesse de rotation.

5. Appareil de production d'énergie du type énergie renouvelable selon la revendication 2, comprenant en outre :

un appareil de mesure de vitesse de rotation (32) qui mesure une vitesse de rotation de l'arbre tournant (8) ; et

une unité de détermination du couple idéal (41) qui détermine le couple idéal de l'arbre tournant (8) en fonction d'une vitesse estimée du flux d'énergie de la source d'énergie renouvelable, estimée à partir de la vitesse de rotation mesurée de l'arbre tournant (8).

6. Appareil de production d'énergie du type énergie renouvelable selon la revendication 5,

dans lequel une pluralité d'appareils de mesure de vitesse de rotation (32) sont prévus, et

dans lequel la vitesse estimée du flux d'énergie est estimée à partir d'une moyenne des vitesses de rotation de l'arbre tournant (8) mesurées par les appareils de mesure de vitesse de rotation (32).

7. Appareil de production d'énergie du type énergie renouvelable selon la revendication 2, comprenant en outre :

un appareil de mesure de vitesse (33) qui mesure une vitesse du flux d'énergie de la source d'énergie renouvelable ; et

une unité de détermination du couple idéal (41) qui détermine le couple idéal de l'arbre tournant (8) en fonction de la vitesse mesurée du flux d'énergie.

8. Appareil de production d'énergie du type énergie renouvelable selon la revendication 7,

dans lequel une pluralité des appareils de mesure de vitesse de rotation (33) sont prévus, et

dans lequel l'unité de détermination du couple idéal (41) détermine le couple idéal de l'arbre tournant (8) en fonction d'une moyenne des vitesses du flux d'énergie mesurées par les appareils de mesure de vitesse (33).

**9.** Appareil de production d'énergie du type énergie renouvelable selon la revendication 2, comprenant en outre : une unité de correction de la sortie cible de la pompe (44) qui corrige la sortie cible de la pompe hydraulique, $POWER_{pump}$, en se basant sur une instruction de besoin en énergie provenant d'un contrôleur de parc (200) d'un parc de production d'énergie auquel appartient l'appareil de production d'énergie du type énergie renouvelable.

**10.** Appareil de production d'énergie du type énergie renouvelable selon la revendication 1, dans lequel l'unité de détermination de la sortie cible du moteur (45) comprend un filtre passe-bas qui lisse la sortie cible de la pompe hydraulique, $POWER_{pump}$, de façon à obtenir la sortie cible du moteur hydraulique, $POWER_{motor}$.

**11.** Appareil de production d'énergie du type énergie renouvelable selon la revendication 1, dans lequel l'unité de détermination de la demande du moteur (46) obtient la correction de la demande $D_b$ en multipliant une différence entre la pression d'huile $P_s$ et la pression d'huile cible $P_d$ par un gain variable $K_p$ qui est variable en fonction de la pression d'huile $P_s$.

**12.** Appareil de production d'énergie du type énergie renouvelable selon la revendication 11, dans lequel le gain variable $K_p$ est réglé de façon à ce que : lorsque la pression d'huile $P_s$ n'est pas supérieure à un minimum, $P_{min}$, d'une plage de tolérance de la pression d'huile dans la canalisation d'huile sous haute pression (16) ou pas inférieure à un maximum, $P_{max}$, de cette plage de tolérance, le gain variable $K_p$ est une valeur maximum $K_{max}$; et lorsque la pression d'huile $P_s$ est située entre le minimum $P_{min}$ et le maximum $P_{max}$ de la plage de tolérance de la pression d'huile dans la canalisation d'huile sous haute pression (16), plus la pression d'huile $P_s$ devient proche du minimum $P_{min}$ ou du maximum $P_{max}$, plus le gain variable $K_p$ augmente.

**13.** Appareil de production d'énergie du type énergie renouvelable selon la revendication 12, dans lequel le minimum $P_{min}$ de la plage de tolérance est déterminé en se basant sur une vitesse de rotation de l'arbre tournant (8) et sur un déplacement maximum $D_{max}$ qui peut être réglé pour la pompe hydraulique (12).

**14.** Appareil de production d'énergie du type énergie renouvelable selon la revendication 2, comprenant en outre :

un capteur de température ambiante (34) qui mesure la température ambiante de l'appareil de production d'énergie,

dans lequel le couple idéal de l'arbre tournant (8) est corrigé en se basant sur la température ambiante mesurée.

**15.** Appareil de production d'énergie du type énergie renouvelable selon la revendication 1, comprenant en outre :

un capteur de température d'huile (35) qui mesure une température de l'huile dans la canalisation d'huile sous haute pression ; et une unité de correction de la demande du moteur (47) qui corrige la demande de déplacement $D_m$ du moteur hydraulique en se basant sur la température de l'huile mesurée dans la canalisation d'huile sous haute pression (16).

**16.** Appareil de production d'énergie du type énergie renouvelable selon la revendication 1, cet appareil de production d'énergie étant un aérogénérateur qui produit de l'énergie à partir du vent comme source d'énergie renouvelable.

**17.** Procédé d'utilisation d'un appareil de production d'énergie du type énergie renouvelable qui comprend :

un arbre tournant (8) entraîné par la source d'énergie renouvelable ; une pompe hydraulique (12) entraînée par l'arbre tournant (8) ; un moteur hydraulique (14) qui est entraîné par de l'huile pressurisée alimentée depuis la pompe hydraulique (12) ; une génératrice (20) raccordée au moteur hydraulique (14) ; une canalisation d'huile sous haute pression (16) à travers laquelle un côté refoulement de la pompe hydraulique (12) est en communication fluidique avec un côté admission du moteur hydraulique (14) ; et une canalisation d'huile sous basse pression (18) à travers laquelle un côté admission de la pompe hydraulique (12) est en communication fluidique avec un côté refoulement du moteur hydraulique (14), ce procédé comprenant les étapes consistant à :

déterminer une sortie cible du moteur hydraulique, $POWER_{motor}$, en se basant sur la sortie cible de la pompe hydraulique, $POWER_{pump}$;
déterminer une demande de déplacement $D_m$ du moteur hydraulique (14) ; et à

régler le déplacement du moteur hydraulique (14) sur la demande de déplacement déterminée $D_m$;

**caractérisé en ce que**

l'étape de détermination de la demande $D_m$ comprend l'obtention de :

une demande nominale $D_n$ du moteur hydraulique (14) en divisant la sortie cible du moteur hydraulique, $POWER_{motor}$, par une vitesse de rotation du moteur hydraulique (14) et une pression d'huile $P_s$ dans la canalisation d'huile sous haute pression (16),

une pression d'huile cible $P_d$ dans la canalisation d'huile sous haute pression (16) en se basant sur la sortie cible, $POWER_{motor}$, et

une correction de la demande $D_b$ déterminée à partir d'une différence entre la pression d'huile $P_s$ dans la canalisation d'huile sous haute pression (16) et la pression d'huile cible $P_d$, et

ce procédé comprend en outre la détermination de la demande de déplacement $D_m$ du moteur hydraulique (14) à partir d'une somme de la demande nominale du moteur $D_n$ et de la correction de la demande $D_b$.

[Fig. 1]

[Fig. 2]

[Fig. 3]

[Fig. 4]

[Fig. 5]

```
            ┌──────────────┐
            │    Start     │
            └──────┬───────┘
                   ▼
    ┌─────────────────────────────┐
    │    Measure Wr of rotor      │────S1
    └──────────────┬──────────────┘
                   ▼
    ┌─────────────────────────────┐
    │    Determine Td of pump      │────S2
    └──────────────┬──────────────┘
                   ▼
    ┌─────────────────────────────┐
    │    Determine POWERpump       │────S3
    └──────────────┬──────────────┘
                   ▼
    ┌─────────────────────────────┐
    │ Correct POWERpump according to │────S4
    │   power requirement inst.     │
    └──────────────┬──────────────┘
                   ▼
    ┌─────────────────────────────┐
    │ Determine POWERmotor by smoothing │────S5
    └──────────────┬──────────────┘
                   ▼
    ┌─────────────────────────────┐
    │    Calculate Th of pump      │────S6
    └──────────────┬──────────────┘
                   ▼
    ┌─────────────────────────────┐
    │ Calculate Pmin of high pressure oil │────S7
    │ from Th of pump and Dmax of pump │
    └──────────────┬──────────────┘
                   ▼
    ┌─────────────────────────────┐
    │          Set Kp             │────S8
    └──────────────┬──────────────┘
                   ▼
    ┌─────────────────────────────┐
    │ Calculate Pd of high pressure oil │────S9
    │      from POWERmotor        │
    └──────────────┬──────────────┘
                   ▼
    ┌─────────────────────────────┐
    │    Calculate Dn of motor     │────S10
    └──────────────┬──────────────┘
                   ▼
    ┌─────────────────────────────┐
    │    Calculate Db of motor     │────S11
    └──────────────┬──────────────┘
                   ▼
    ┌─────────────────────────────────────┐
    │ Calculate Dm of motor from sum of Dn and Db │────S12
    └──────────────┬──────────────────────┘
                   ▼
            ┌──────────────┐
            │     End      │
            └──────────────┘
```

[Fig. 6]

[Fig. 7]

[Fig. 8]

[Fig. 9]

[Fig. 10]

[Fig. 11]

**EP 2 454 475 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007053036 A
- US 4496847 B

- WO 20100033035 A

**Non-patent literature cited in the description**

- **W.H.S. RAMPEN et al.** Gearless transmissions for large wind-turbines - The history and future of hydraulic drives. *DEWEK Bremen,* December 2006